(19) Europäisches Patentamt
European Patent Office
Office européen des brevets

(11) **EP 3 967 388 A1**

(12) **EUROPEAN PATENT APPLICATION**
published in accordance with Art. 153(4) EPC

(43) Date of publication:
16.03.2022 Bulletin 2022/11

(21) Application number: 20802016.4

(22) Date of filing: 28.04.2020

(51) International Patent Classification (IPC):
*B01D 61/36* (2006.01)    *B01D 69/00* (2006.01)
*B01D 69/10* (2006.01)    *B01D 69/12* (2006.01)
*B01D 71/02* (2006.01)    *C01B 39/02* (2006.01)

(52) Cooperative Patent Classification (CPC):
B01D 61/36; B01D 69/00; B01D 69/10;
B01D 69/12; B01D 71/02; C01B 39/02

(86) International application number:
PCT/JP2020/018072

(87) International publication number:
WO 2020/226097 (12.11.2020 Gazette 2020/46)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 08.05.2019 JP 2019087979

(71) Applicant: Hitachi Zosen Corporation
Osaka-shi, Osaka 559-8559 (JP)

(72) Inventors:
• KIDA Koji
Osaka-shi, Osaka 559-8559 (JP)
• IMASAKA Satoshi
Osaka-shi, Osaka 559-8559 (JP)

(74) Representative: Grünecker Patent- und
Rechtsanwälte
PartG mbB
Leopoldstraße 4
80802 München (DE)

(54) **ZEOLITE MEMBRANE COMPOSITE, AND METHOD FOR PRODUCING SAME**

(57) Provided is a zeolite membrane composite used for separation of a mixture, which has a high separation factor and is easily produced while maintaining a practically usable permeation flow rate. The zeolite membrane composite includes: a porous support; and an aluminosilicate zeolite membrane formed on a surface of the porous support and having a framework density of 10 or more and 17 or less. A Si/Al molar ratio of a surface of the zeolite membrane is 5 or more, and a ratio ($A_e/A_0$) of a developed membrane area $A_e$ in consideration of unevenness on the surface of the zeolite membrane to an apparent membrane area $A_0$ not in consideration of the unevenness on the surface of the zeolite membrane is 2 or more and 20 or less.

**EP 3 967 388 A1**

**Description**

Technical Field

The present invention relates to a zeolite membrane composite and a method for manufacturing a zeolite membrane composite.

Background Art

A zeolite membrane composite has attracted attention in recent years because of having high environmental resistance in harsh environments such as a high-temperature and low-pH environment or a high-temperature and water-containing environment, as compared with a polymer separation membrane in the related art. In a harsher environment, a high-silica zeolite membrane further improved in resistance (water resistance, acid resistance, and heat resistance) has been reported (see PTL 1).

A molar ratio of $SiO_2/Al_2O_3$ in the zeolite membrane described in PTL 1 is 5 or more and 100 or less. In Examples, the molar ratio of $SiO_2/Al_2O_3$ is 15 to 100, a crystal form is CHA-type, a permeation flow rate of water/acetic acid is 0.9 $kg/m^2 \cdot h$ to 6.0 $kg/m^2 \cdot h$, and a separation factor is 26 to 649.

A zeolite membrane described in PTL 2 is characterized in that a surface of the zeolite membrane is further subjected to a silylation treatment in order to increase a separation factor while further increasing resistance in the presence of an organic acid and maintaining a permeation flow rate at several $kg/m^2 \cdot h$. A molar ratio of $SiO_2/Al_2O_3$ on the surface of the zeolite membrane is set to be 30 or more larger than the molar ratio of $SiO_2/Al_2O_3$ of the zeolite membrane itself, and therefore, hydrophilicity of the surface is improved, and both the permeation flow rate and the separation factor are achieved.

In a water separation test of hydrous acetic acid using the zeolite membrane described in PTL 2, the permeation flow rate is 0.84 $kg/m^2 \cdot h$ to 2.3 $kg/m^2 \cdot h$, the separation factor is 500 to 210,000, the permeation flow rate is maintained at several $kg/m^2 \cdot h$, and a separation factor of 10,000 or more is achieved except for an example of a separation factor of 500.

Citation List

Patent Literature

PTL 1: JP-A-2011-121045
PTL 2: Japanese Patent No. 6107809

Summary of Invention

In general, when a Si/Al ratio in a zeolite layer is high, a zeolite membrane having high environmental resistance is obtained. On the other hand, when the Si/Al ratio in the zeolite layer increases, the water repellency also increases, and the water permeability decreases. That is, a trade-off relationship is established between the environmental resistance and the water permeability. Therefore, in order to exhibit the environmental resistance and high dehydration performance, it is necessary to use a specially treated zeolite membrane as in PTL 2. In order to manufacture a zeolite membrane composite described in PTL 2, a seed crystal is applied onto a porous support, and then a zeolite membrane is formed by hydrothermal synthesis. Thereafter, it is necessary to further perform a silylation treatment on the surface of the zeolite membrane.

According to the method described in PTL 2, for example, when water is used as a solvent, a predetermined amount of a Si compound and a predetermined amount of an Al compound are mixed with temperature-controlled water, a basic substance such as NaOH is added thereto, a solution in which a predetermined amount of an acid such as a carboxylic acid is dissolved is prepared, a zeolite membrane composite in which a zeolite membrane is formed on a porous support is appropriately sealed, and the zeolite membrane composite is immersed in the prepared solution and maintained at a predetermined temperature for a predetermined time to perform a silylation treatment.

As described above, in order to produce the zeolite membrane composite described in PTL 2, it is necessary to further perform a step equal to or more than a hydrothermal synthesis treatment after the membrane formation by usual hydrothermal synthesis, which causes the manufacturing process to be complicated.

An object of the invention is to provide a zeolite membrane composite used for separation of a mixture, which has a high separation factor, has high environmental resistance, and is easily produced while maintaining a practically usable permeation flow rate.

Solution to Problem

An invention (1) relates to a zeolite membrane composite including: a porous support; and an aluminosilicate zeolite membrane formed on a surface of the porous support and having a framework density of 10 or more and 17 or less, in which a Si/Al molar ratio of a surface of the zeolite membrane is 5 or more, and a ratio ($A_e/A_0$) of a developed membrane area $A_e$ in consideration of unevenness on the surface of the zeolite membrane to an apparent membrane area $A_0$ not in consideration of the unevenness on the surface of the zeolite membrane is 2 or more and 20 or less.

When the ratio ($A_e/A_0$) of the developed membrane area $A_e$ in consideration of the unevenness on the surface of the zeolite membrane to the apparent membrane area $A_0$ not in consideration of the unevenness on the surface of the zeolite membrane is 2 or more, a contact area between a fluid to be separated and the zeolite membrane can be increased, and a permeation flow rate can be increased. Further, when the ratio ($A_e/A_0$) is 20 or less, a zeolite membrane with less defects can be obtained.

Here, the apparent membrane area $A_0$ is a membrane area not in consideration of fine unevenness on the surface. For example, in a zeolite membrane composite in which a zeolite membrane is formed on a cylindrical porous support, the apparent membrane area $A_0$ corresponds to a geometric surface area of a cylindrical side surface on which the zeolite membrane is formed. Further, the developed membrane area $A_e$ corresponds to a surface area of the zeolite membrane obtained by integrating a fine surface area in consideration of the unevenness on the surface. Therefore, the ratio ($A_e/A_0$) is 1 if there is no unevenness on the membrane surface. For example, the ratio ($A_e/A_0$) is about 1.4 (route 2) on a surface where a triangle having an apex angle of 90 degrees is engraved and there is no fine unevenness, and the ratio ($A_e/A_0$) is 2 on a surface where a triangle having an apex angle of 60 degrees is engraved and there is no fine unevenness. Therefore, the ratio ($A_e/A_0$) is usually less than 2. The ratio ($A_e/A_0$) is preferably 2 or more, more preferably 3 or more, and still more preferably 5 or more. Further, since the ratio ($A_e/A_0$) increases when fine cracks and the like are present, an upper limit of the ratio ($A_e/A_0$) is preferably 20 or less, more preferably less than 15, and still more preferably less than 10.

When the framework density of the zeolite membrane of the invention (1) is 10 or more and 17 or less, a large diffusion rate and a large water adsorption amount are exhibited, and a high permeation flow rate can be realized. The framework density ($T/1000 \text{ Å}^3$) of the zeolite is usually 17 or less, preferably 16 or less, more preferably 15.5 or less, particularly preferably 15 or less, and usually 10 or more, preferably 11 or more, more preferably 12 or more.

The framework density means the number of elements (T elements) other than oxygen constituting a skeleton per 1000 $\text{Å}^3$ of the zeolite, and this value is determined by a structure of the zeolite. A relationship between the framework density and the structure of the zeolite is shown in ATLAS OF ZEOLITE FRAMEWORK TYPES Fifth Revised Edition 2001 ELSEVIER.

An invention (2) relates to the zeolite membrane composite according to the invention (1), in which the zeolite membrane has a pore structure having an oxygen-containing 6 or more-membered ring and an oxygen-containing 8 or less-membered ring. An oxygen-containing n-membered ring structure determines a size of a pore of the zeolite, and zeolite having an oxygen-containing 6 or more-membered ring has a pore diameter larger than the Kinetic diameter of $H_2O$ molecules, and thus has a large permeation flux and is practical. Further, in the case of an oxygen-containing 8-membered or less ring, the pore diameter is small, and in the case of an organic compound having a large size, the separation performance is improved, and the use is wide.

Examples of the zeolite having an oxygen-containing 6-membered to 8-membered ring structure include AEI, AFG, AFX, ANA, CHA, EAB, ERI, ESV, FAR, FRA, GIS, ITE, KFI, LEV, LIO, LOS, LTN, MAR, PAU, RHO, RTH, SOD, TOL, and UFI. In the present description, the structure of the zeolite is indicated by a code that defines a structure of zeolite defined by International Zeolite Association (IZA) as described above.

An invention (3) relates to the zeolite membrane composite according to the invention (1) or (2), in which the zeolite membrane contains zeolite having a CHA-type or AFX-type crystal structure. The CHA-type crystal structure has a framework density of 14.5 and a pore size of 0.38 × 0.38 nm, and is suitable for separating water and the like from a hydrous organic substance and the like. Similarly, the AFX-type crystal structure has a framework density of 14.7 and a pore size of 0.34 × 0.36 nm, and is suitable for separating water and the like from a hydrous organic substance and the like.

An invention (4) relates to a method for manufacturing a zeolite membrane composite, the method including: a step of attaching a seed crystal to a porous support and forming a zeolite membrane on a surface of the porous support by hydrothermal synthesis, in which the seed crystal is a mixture of seed crystals having different number average particle diameters and having two types of dispersion peaks, and a size of each of seed crystals has a coefficient of variation CV value of 12% or less, a ratio of seed crystals having a smaller number average particle diameter to all seed crystals is 45 wt% or more and 95 wt% or less, and a number average particle diameter of seed crystals having a larger number average particle diameter among the seed crystals is 0.6 times or more and 2 times or less an average pore diameter of the porous support. Here, the step of forming the zeolite membrane on the surface of the porous support by hydrothermal synthesis includes steps of preparation of a seed crystal, support of the seed crystal on a support, membrane formation by hydrothermal synthesis, and a heat treatment of the zeolite membrane. The CV value is a value obtained by dividing a standard deviation by an arithmetic average, and is an index representing a relative variation. The CV value can be considered to have a smaller variation as the value is smaller.

According to the manufacturing method, a mixture of seed crystals having different number average particle diameters and having two types of dispersion peaks is used as a seed crystal, and therefore, a dense zeolite membrane in which small seed crystals enter gaps between large seed crystals can be formed. In addition, in the manufacturing of the zeolite membrane composite, it is not necessary to perform a complicated manufacturing process such as the manufacturing process described in PTL 2.

The seed crystal is a mixture of seed crystals having two types of dispersion peaks, and by setting the coefficient of variation CV value of each seed crystal to 12% or less, the variation in the particle diameter between the seed crystals having a larger diameter and the seed crystals having a smaller diameter is small, and a zeolite layer which is more dense and has less defects can be formed.

By setting the amount of the seed crystals having a smaller diameter to 45 wt% or more and 95 wt% or less of the total amount of the seed crystals, the gaps between the seed crystals having a larger diameter can be filled, and furthermore, the seed crystals having a smaller diameter can be attached to the surfaces of the seed crystals having a larger diameter, the developed membrane area $A_e$ can be increased, and the permeation flow rate can be increased.

An invention (5) relates to the method for manufacturing a zeolite membrane composite according to the invention (4), in which the number average particle diameter of the seed crystals having a smaller number average particle diameter among the seed crystals is 0.2 times or more and 0.6 times or less the number average particle diameter of the seed crystals having a larger number average particle diameter. When the number average particle diameter of the seed crystals having a smaller number average particle diameter is 0.2 times or more and 0.6 times or less the number average particle diameter of the seed crystals having a larger number average particle diameter, the gaps between the seed crystals having a larger diameter can be more appropriately filled.

An invention (6) relates to the method for manufacturing a zeolite membrane composite according to the invention (4) or (5), in which the porous support has an average pore diameter of 0.1 $\mu$m or more and 5 $\mu$m or less. The average pore diameter of the porous support is not particularly limited, but from the viewpoint of pressure loss, a lower limit is more preferably 0.3 $\mu$m or more, and particularly preferably 0.5 $\mu$m or more. An upper limit is more preferably 3 $\mu$m or less, and particularly preferably 1.5 $\mu$m or less.

An invention (7) relates to a dehydration method including: removing water from a mixed aqueous solution or mixed water vapor containing an acidic organic compound by using the zeolite membrane according to any one of the inventions (1) to (3). The zeolite membranes according to the inventions (1) to (3) can also be suitably used for an osmotic vaporization method (pervaporation method) in which dehydration is performed from a hydrous organic compound and the like, or a vapor permeation method in which vaporized vapor is separated and concentrated. In particular, since the pervaporation method is a separation or concentration method in which a mixture of liquids is directly introduced into a separation membrane, the process including separation or concentration can be simplified.

An invention (8) relates to a method for evaluating a surface of a zeolite membrane composite, including: calculating, based on the number of adsorbed molecular probes, the developed membrane area $A_e$ in consideration of the unevenness on the surface of the zeolite membrane according to the invention (1). In the method for evaluating a surface of a zeolite membrane composite in the related art, since a separation test of gas and the like is actually performed, the inspection time is long. According to this method, the surface of the zeolite membrane composite can be evaluated without performing an actual separation test of gas and the like. Since the surface area of the membrane influences the efficiency of separation or concentration, it is important that the membrane is dense and has a large surface area in order to increase the efficiency. It is not easy to measure the surface area of the membrane in consideration of fine unevenness, but it is possible to measure the surface area by using a probe having a molecular level size. According to this measurement method, it is possible to perform measurement having high efficiency.

An invention (9) relates to a method for inspecting a quality of a zeolite membrane composite including: identifying a defective zeolite membrane containing a defect of or beyond an allowable limit based on the number of the adsorbed molecular probes by using the method for evaluating a surface of a zeolite membrane composite according to the invention (8). In a dense zeolite membrane, the larger the ratio ($A_e/A_0$) of the developed membrane area $A_e$ in consideration of the unevenness on the surface to the apparent membrane area $A_0$ not in consideration of the unevenness on the surface of the zeolite membrane, the larger the surface area, the larger the permeation flow rate, and the higher the separation and concentration efficiency. Further, when there are many defects, many molecular probes permeate into the defects and the ratio ($A_e/A_0$) is large, and therefore, when the ratio is equal to or larger than a certain value, such zeolite can be excluded as defective zeolite from non-defective zeolite.

**Advantageous Effects of Invention**

The zeolite membrane composite in the invention can be used for separation and concentration of a mixture having a high separation factor while maintaining a practically usable permeation flow rate, and it is possible to provide a zeolite membrane composite that can be easily produced.

**Brief Description of Drawings**

[FIG. 1] FIG. 1 is a scanning electron microscope (SEM) photograph of seed crystals having a smaller average particle diameter among CHA-type zeolite seed crystals used in Examples 1 to 4 and 7 to 12 and Comparative Examples 1 and 4 to 7.
[FIG. 2] FIG. 2 is a SEM photograph of seed crystals having a larger average particle diameter among CHA-type zeolite seed crystals used in Examples 1 to 6 and 9 to 10.
[FIG. 3] FIG. 3 is a SEM photograph of seed crystals having a smaller average particle diameter among AFX-type zeolite seed crystals used in Examples 13 to 15 and Comparative Example 10.
[FIG. 4] FIG. 4 is a SEM photograph of seed crystals having a larger average particle diameter among AFX-type zeolite seed crystals used in Examples 13 to 15 and Comparative Examples 9 to 10.
[FIG. 5] FIG. 5 is a SEM photograph of a cross section of a CHA-type zeolite membrane in Example 1.
[FIG. 6] FIG. 6 is an X-ray diffraction pattern of a surface of the CHA-type zeolite membrane in Example 1.
[FIG. 7] FIG. 7 is a SEM photograph of a cross section of an AFX-type zeolite membrane in Example 13.
[FIG. 8] FIG. 8 is an X-ray diffraction pattern of a surface of the AFX-type zeolite membrane in Example 13.
[FIG. 9] FIG. 9 shows particle size distributions of CHA-type zeolite seed crystals used in Examples 1, 9, and 10.
[FIG. 10] FIG. 10 shows a particle size distribution of a CHA-type zeolite seed crystal used in Example 4.
[FIG. 11] FIG. 11 shows a particle size distribution of a CHA-type zeolite seed crystal used in Comparative Example 1.
[FIG. 12] FIG. 12 shows a particle size distribution of a CHA-type zeolite seed crystal used in Comparative Example 6.
[FIG. 13] FIG. 13 shows a particle size distribution of a CHA-type zeolite seed crystal used in Comparative Example 7.
[FIG. 14] FIG. 14 shows a particle size distribution of a CHA-type zeolite seed crystal used in Comparative Example 8.
[FIG. 15] FIG. 15 shows a particle size distribution of an AFX-type zeolite seed crystal used in Example 13.
[FIG. 16] FIG. 16 shows a particle size distribution of an AFX-type zeolite seed crystal used in Example 15.

**Description of Embodiments**

An embodiment of a zeolite membrane composite in the invention is not particularly limited. A form of a porous support is not particularly limited, and examples thereof include a hollow cylindrical shape and a flat plate shape. A zeolite membrane to be used is preferably an aluminosilicate zeolite membrane having a framework density of 10 or more and 17 or less, and for example, a crystal form is not limited. A Si/Al molar ratio on a surface of the zeolite membrane is preferably 5 or more.

Hereinafter, the invention will be described in detail. [Porous Support]

A porous support (hereinafter, also simply referred to as a "support") in the invention may be any one that can crystallize zeolite as a thin membrane on the surface, and examples thereof include anodic oxide membrane porous supports and porous supports made of metals such as alumina, silica, mullite, zirconia, titania, stainless steel, and aluminum, or various alloys. When a zeolite membrane formed on the porous support is used as a molecular sieve and the like, it is preferable to set an average pore diameter and the like of the porous support so as to satisfy conditions that (a) the zeolite membrane can be firmly supported, (b) a pressure loss is as small as possible, and (c) the porous support has a sufficient self-supporting property (mechanical strength). Specifically, the porous support preferably has an average pore diameter of 0.1 $\mu$m to 5 $\mu$m. A lower limit is more preferably 0.3 $\mu$m or more, and particularly preferably 0.5 $\mu$m or more. An upper limit is more preferably 3 $\mu$m or less, and particularly preferably 1.5 $\mu$m or less.
A thickness of the porous support is preferably 1 mm to 3 mm. Further, a porosity of the porous support is preferably 20% to 50%, and more preferably 35% to 40%.
The shape of the porous support is not particularly limited, and porous supports with various shapes such as a tubular shape, a flat plate shape, a honeycomb shape, a hollow fiber shape, and a pellet shape can be used. For example, in a case of a tubular shape, a size of the porous support is not particularly limited, but is practically about 2 cm to 200 cm in length, about 0.5 cm to 2 cm in inner diameter, and about 0.5 mm to 4 mm in thickness.
The porous support is preferably subjected to a treatment of removing impurities on the surface by a method such as water washing or ultrasonic washing. For example, the surface of the support may be cleaned by ultrasonic cleaning with water for 1 to 10 minutes. In general, in order to improve surface smoothness, the surface is polished with a sand paper, a grinder, and the like. However, there is a possibility that a ratio $(A_e/A_0)$ of a developed membrane area $A_e$ in consideration of the unevenness on the surface is small, and since a permeation flow rate may be small and the separation and concentration efficiency may decrease, excessive polishing leads to a reverse effect. A lower limit of a surface roughness Ra of the porous support as a target is preferably 1.0 $\mu$m or more, and more preferably 1.2 $\mu$m or more. Further, an upper limit thereof is preferably 2.4 $\mu$m or less, and more preferably 2.0 $\mu$m or less.

[Synthesis of CHA-type Zeolite Membrane]

In a method according to the invention, a zeolite membrane having a CHA-type crystal structure is formed on the surface of the porous support by hydrothermal synthesis using an aqueous reaction mixture containing a Si element source, an Al element source, an alkali source, and an organic structure directing agent.

In the hydrothermal synthesis, it is desirable to add a seed crystal to the synthesis system in order to promote crystallization of the zeolite on the surface of the support. As a method of adding the seed crystal, a method of adding the seed crystal into the aqueous reaction mixture, a method of attaching the seed crystal onto an intermediate layer of the support, and the like can be used. When the seed crystal is attached to the surface of the support in advance, a dense zeolite membrane having good separation performance is easily formed.

As the seed crystal to be used in the hydrothermal synthesis of the CHA-type zeolite membrane, it is preferable that CHA-type zeolite particles have a Si/Al (molar ratio) of 10 or more, preferably 50 or more, and more preferably contain no aluminum and have a Si/Al (molar ratio) of $\infty$. A preparation method is not particularly limited as long as the seed crystal has a desired particle diameter and a desired degree of dispersion. Examples of a method for obtaining CHA-type zeolite particles include those described in Microporous and Mesoporous Materials Journal, vol. 153, pp. 94 to 99 (2012), and the like.

In order to attach the seed crystal to the surface of the support, for example, a dipping method in which the seed crystal is dispersed in a solvent such as water and the support is immersed in the dispersion liquid to attach the seed crystal, or a method in which the seed crystal is mixed with a solvent such as water to form a slurry and the slurry is applied to the surface of the support can be used.

In the invention, a crystal structure and a constituent element of the seed crystal to be used are not limited, but a number average particle diameter and a particle size distribution of the seed crystal are important factors that influence the developed membrane area $A_e$ of the zeolite membrane to be obtained. It is desirable to prepare a seed crystal whose particle diameter is precisely controlled.

The seed crystal is preferably a mixture of large and small seed crystals having two or more types of dispersion peaks in crystal particle diameter, and each coefficient of variation CV value thereof is preferably 12% or less. The coefficient of variation CV value is more preferably 11% or less, still more preferably 10% or less, and particularly preferably 9% or less. As the variation in crystal particle diameter is smaller, a small diameter seed crystal is more likely to enter a gap between large diameter seed crystals, and a dense synthetic membrane is more likely to be formed.

Regarding a ratio of mixing two types of seed crystals having large and small crystal particle diameters, a lower limit amount of the seed crystals having a smaller crystal particle diameter is preferably 45 wt% or more, more preferably 60 wt% or more, still more preferably 70 wt% or more, and particularly preferably 75 wt% or more with respect to all seed crystals. An upper limit amount thereof is preferably 95 wt% or less, more preferably 90 wt% or less, still more preferably 85 wt% or less, and particularly preferably 80 wt% or less. When the lower limit amount of the seed crystals having a smaller crystal particle diameter is less than 45 wt%, the amount of the seed crystals having a smaller diameter required to fill gaps between the seed crystals having a larger diameter is insufficient, and when the upper limit amount of the seed crystals having a smaller diameter is more than 95 wt%, there is a possibility that the seed crystals have an amount more than necessary and block the pores of the support, which may cause a decrease in permeation flow rate.

Regarding the size of the seed crystal, a lower limit value of the number average particle diameter of the seed crystal having a larger diameter with respect to the average pore diameter of the porous support is preferably 0.6 times or more, more preferably 0.8 times or more, still more preferably 0.9 times or more, and particularly preferably 1.0 time or more. An upper limit value thereof is preferably 2.0 times or less, more preferably 1.6 times or less, still more preferably 1.3 times or less, and particularly preferably 1.2 times or less. When the lower limit value is less than 0.6 times, the seed crystal having a larger diameter may enter the pores of the porous support and block the pores, and when the upper limit value is more than 2.0 times, a thickness of the zeolite membrane may become too thick and the permeation flow rate may decrease.

The average particle diameter of the seed crystal having a smaller diameter is preferably 0.2 times or more and 0.6 times or less the average particle diameter of the seed crystal having a larger diameter. A lower limit thereof is more preferably 0.25 times or more, and still more preferably 0.3 times or more. An upper limit thereof is more preferably 0.4 times or less, and still more preferably 0.35 times or less. It is considered that when the average particle diameter of the seed crystal having a smaller diameter is in such a ratio with respect to the average particle diameter of the seed crystal having a larger diameter, the seed crystals having a smaller diameter easily enter gaps between the seed crystals having a larger diameter, and a dense zeolite membrane rich in surface undulation can be formed.

The particle diameter of the seed crystal can be obtained as the number average particle diameter based on an average of diameters in terms of circles from a SEM image photograph. The number average particle diameter is defined in Japanese Industrial Standard JIS Z 8819.

For the hydrothermal synthesis, a pressure vessel such as an autoclave may be used. The arrangement of the porous support in the pressure vessel is preferably horizontal with respect to the pressure vessel because there is a possibility that a concentration of a hydrothermal synthesis solution is biased due to the influence of gravity in a vertical direction.

In the manufacturing method of the invention, an FAU-type zeolite which is not dealuminized is used as the Si element source and the Al element source. By using the FAU-type zeolite, synthesis can be performed for a short time. In JP-A-2011-121854, colloidal silica and aluminum hydroxide are used as the Si element source and the Al element source, and the synthesis takes 48 hours. In JP-A-2013-126649, dealuminized FAU-type zeolite is used, which is not industrial because a sulfuric acid treatment step and an acid removal step are required. Since the FAU-type zeolite which has not been subjected to a dealuminization treatment is converted into the CHA-type zeolite during the hydrothermal synthesis reaction, a high silica CHA-type zeolite membrane having a Si/Al (molar ratio) ratio of 10.5 to 100.0 can be formed. By a hydrothermal treatment, FAU-type zeolite powder is once decomposed on the surface of the porous support, and then, starting from the seed crystal, forms a nucleus of zeolite having the same crystal structure (that is, a CHA structure) as the seed crystal. Alternatively, after the FAU-type zeolite is decomposed, the nucleus of the zeolite having the CHA-type structure is formed by the action of the organic structure directing agent. A crystal of the produced zeolite grows from the formed nucleus. Since structure units of the FAU and the CHA are the same, a part of the FAU structure directly contributes to the crystallization of the CHA. Therefore, defects are less likely to occur in the crystal structure. Further, in the invention, since the FAU-type zeolite which has not been subjected to a dealuminization treatment is used, the crystallinity of the FAU is high, and the CHA membrane can be synthesized by further making use of the FAU structure.

The FAU-type zeolite may be a commercially available product, for example, HSZ-350HUA (USY = Ultra Stable Y, Si/Al (molar ratio) = 10, $Na_2O/Al_2O_3$ = 0.007, manufactured by Tosoh Corporation), HSZ-360HUA (USY = Ultra Stable Y, Si/Al (molar ratio) = 14, $Na_2O/Al_2O_3$ = 0.006, manufactured by Tosoh Corporation). One type of FAU-type zeolite may be used, or two or more types thereof may be used in combination.

In the method of the invention, it is preferable to use N,N,N-trimethyl-1-adamantaneammonium hydroxide as the organic structure directing agent. By using N,N,N-trimethyl-1-adamantaneammonium hydroxide, synthesis can be performed in a short time. Also in the invention, the synthesis can be performed within 5 hours.

In the method of the invention, synthesis conditions such as a time and a temperature of the hydrothermal synthesis may be those of methods in the related art, and the synthesis conditions include a temperature of 100°C to 200°C, preferably 120°C to 180°C, and a time of 5 hours to 15 days, preferably 1 day to 7 days. Further, after completion of the hydrothermal synthesis, the membrane is taken out from the pressure vessel, washed with water to remove excess gel-like substances on the membrane surface, dried in air at room temperature to 150°C, and fired to remove the organic structure directing agent present in the membrane layer. Firing conditions include a temperature of 400°C or higher for 3 hours to 100 hours, preferably a temperature of 500°C to 600°C for 10 hours, and the temperature is raised and lowered at a rate of 0.1°C/min to 1°C/min to prevent the occurrence of cracks in the zeolite membrane due to thermal expansion.

[CHA-type Zeolite Membrane]

In the formed zeolite membrane having the CHA-type crystal structure, the Si/Al (molar ratio) on the CHA-type zeolite membrane is 5 or more, preferably 10 or more, and more preferably 20 or more. When the Si/Al (molar ratio) is within the above range and the zeolite membrane is densely formed, a hydrophilic compound, particularly water, from a mixture containing an organic substance can be selectively permeated. Further, a zeolite membrane which has high acid resistance and is hardly dealuminized can be obtained. The Si/Al (molar ratio) of the zeolite membrane means a numerical value obtained by subjecting the surface of the zeolite membrane to photoelectron spectroscopy (XPS). A thickness of the zeolite membrane is preferably 1 μm to 10 μm, and more preferably 1 μm to 4 μm.

The CHA-type zeolite is zeolite having a CHA structure, which has a code that defines the structure of zeolite defined by International Zeolite Association (IZA), and has a crystal structure equivalent to that of chabazite naturally produced. The CHA-type zeolite has a structure characterized by having a three-dimensional pore composed of an oxygen-containing 8-membered ring having a pore diameter of 3.8 × 3.8 Å, and the structure is characterized by X-ray diffraction data.

[Synthesis of AFX-type Zeolite Membrane]

Hereinafter, a method for synthesizing an AFX-type zeolite membrane will be described, but a part of the description of the parts same as those of the method for synthesizing the CHA-type zeolite membrane will be omitted. The preparation of the AFX-type zeolite membrane includes four steps of preparation of a seed crystal, support of the seed crystal on a support, membrane formation by hydrothermal synthesis, and a heat treatment of the zeolite membrane, similar to the CHA-type zeolite membrane. The preparation will be described in order below.

An AFX-type zeolite seed crystal used for the preparation of the AFX-type zeolite membrane can be prepared by the method described in, for example, Reference Literature (Chemistry of Materials, Vol. 8, pp. 2409 to 2411 (1996)). As a raw material for synthesis, FAU-type zeolite powder as a silica source and an alumina source, sodium hydroxide as an alkali source, and the like can be used. As the organic structure directing agent, 1,4-bis(1-azabicyclo[2.2.2]octane)butyl bromide (hereinafter, referred to as "[Dab-4]Br$_2$") or 1,4-bis(1-azabicyclo[2.2.2]octane)butyl hydroxide (hereinafter, referred to as "[Dab-4](OH)$_2$") obtained by anion-exchange thereof can be used.

As the AFX-type zeolite seed crystal, it is preferable to use a mixed seed crystal of large and small seed crystals having two or more types of dispersion peaks, similar to the CHA-type zeolite membrane. A preferred mixing ratio of the AFX-type seed crystals having larger and smaller average particle diameters is the same as that of the CHA-type zeolite membrane. The seed crystal can be supported on the porous support by the same method as the method of supporting the CHA-type seed crystal on the porous support.

In synthesis of an AFX-type zeolite membrane composite, for example, a reaction solution containing FAU-type zeolite powder, sodium hydroxide, an organic structure directing agent, and ion exchanged water is prepared, the porous support supporting the seed crystal is immersed therein, and hydrothermal synthesis is performed for 6 to 72 hours under a temperature of 140°C to 200°C, and an AFX-type zeolite membrane can be formed on the surface of the porous support. Thereafter, a heat treatment is performed for 24 hours or longer under a temperature of 450°C or higher to remove the organic structure directing agent, thereby forming the zeolite membrane composite in which the zeolite membrane is formed on the support.

The AFX-type zeolite has an AFX structure, which has a code defining the structure of zeolite defined by International Zeolite Association (IZA), the AFX-type zeolite has a structure characterized by having a three-dimensional pore composed of an oxygen-containing 8-membered ring having a pore diameter of 3.4 × 3.6 Å, and the structure is characterized by X-ray diffraction data.

[Method for Measuring Ratio ($A_e/A_0$) of Developed Membrane Area $A_e$ to Apparent Membrane Area $A_0$]

The apparent membrane area $A_0$ is a geometric area not in consideration of the unevenness on the surface of the zeolite membrane. When a membrane is formed on a rectangular surface, the apparent membrane area is the rectangular area of vertical dimension × horizontal dimension, and when a membrane is formed on an outer surface of a cylindrical support, the apparent membrane area is an area of a product of an outer circumferential dimension of the cylinder and a length dimension of the cylinder on which the membrane is formed. Since the developed membrane area $A_e$ is calculated in consideration of fine unevenness on the membrane surface, the developed membrane area $A_e$ cannot be accurately obtained without using a probe capable of detecting fine unevenness. In the invention, the developed membrane area $A_e$ was obtained using a molecular probe (for example, methylene blue).

[Measurement Principle of Developed Membrane Area $A_e$]

As a measurement principle, the developed membrane area $A_e$ is calculated based on an amount of methylene blue saturated and adsorbed on the surface of the zeolite membrane in a monomolecular layer. The $A_e$ value can be calculated based on the following (equation 1).

$$A_e = (Q_m \times N) \times (A_m \times 10^{-18}) \ [m^2] \cdots (\text{equation } 1)$$

Here, $Q_m$ is a saturated adsorption amount [mol] of the molecular probe, N is an Avogadro's number (6.02 × $10^{23}$ [pieces/mol]), and $A_m$ is an occupied area [nm$^2$] of the probe molecule. In the case of methylene blue, $A_m$ is 1.3 [nm$^2$].

When methylene blue is used as the probe molecule, the $A_e$ value is obtained from a product of the "number of adsorbed methylene blue" and the "occupied area of methylene blue". Here, the adsorbed probe molecule may be not necessarily methylene blue, and may be a substance having a molecular size that cannot be adsorbed to zeolite pores. For example, iodine whose occupied area per molecule is 0.4 [nm$^2$] can also be used instead. In the case where an excessively small probe molecule is used, there is a possibility that the probe molecule is adsorbed inside the zeolite pore or adsorbed also on a crystal grain boundary of the zeolite membrane, and the adsorption amount increases, and

therefore, the $A_e$ value may be overestimated. Therefore, as a rough indication, a lower limit of a molecular weight of a substance that can be used as the probe molecule is 250 [g/mol] or more, and more preferably 300 [g/mol] or more. In the case where an excessively large probe molecule is used, there is a possibility that the probes become steric hindrance, the adsorption amount decreases, and the $A_e$ value is underestimated. Therefore, as a rough indication, an upper limit of the molecular weight of the substance that can be used as the probe molecule is 850 [g/mol] or less, and more preferably 800 [g/mol] or less.

Further, among these substances, a substance having a maximum absorption wavelength in a wavelength region of ultraviolet light or visible light is more preferred. When a dye is used as the molecular probe, visible light absorbance changes according to a concentration thereof, and therefore, by measuring the absorbance of a solution having a known concentration using a spectrophotometer in advance and preparing a calibration curve in which a relationship between the absorbance and the molecular probe concentration is plotted, a molecular probe concentration of an unknown sample can be easily measured. Since methylene blue has a maximum absorption wavelength in the vicinity of $\lambda$ = 664 nm, it is desirable to prepare a calibration curve based on the wavelength. When a molecular probe having no maximum absorption wavelength in the wavelength region of ultraviolet light or visible light is used, a quantifiable analyzer such as liquid chromatography can be used instead.

After the zeolite membrane is immersed in the probe molecule solution, the probe molecule is rapidly adsorbed on the surface of the zeolite membrane to be in an equilibrium state, and an immersion time is preferably at least 5 minutes or longer. When the immersion time is shorter than 5 minutes, an equilibrium concentration is not obtained, and the $A_e$ value may be underestimated. On the other hand, a concentration nearer when a longer period of time is spent, the equilibrium concentration is obtained over and a more accurate $A_e$ value can be calculated, but if the immersion time is 10 minutes or longer, there is almost no change in adsorption amount, and therefore, there is no problem even if the measurement is completed in 10 to 60 minutes.

Since the $A_e$ value is calculated based on the adsorption amount when the probe molecule is brought into a saturated adsorption state by monomolecular adsorption on the membrane surface, when the concentration of the probe molecule is too low, the probe molecule is not brought into the saturated adsorption state, and a correct $A_e$ value cannot be calculated. On the other hand, when the probe molecular concentration is too high, multimolecular layer adsorption occurs, and therefore, the $A_e$ value is overestimated.

When methylene blue is used as the probe molecule, it is preferable to adjust an initial concentration of methylene blue to be 3.9 [$\mu$mol/L] to 7.8 [$\mu$mol/L]. Further, more preferably, the concentration of methylene blue after adsorption equilibrium is in a range of 3.7 [$\mu$mol/L] to 7.6 [$\mu$mol/L]. When evaluation is performed in this concentration range, methylene blue is in a saturated adsorption state in the monomolecular layer on the surface of the zeolite membrane, and therefore, an accurate $A_e$ value can be obtained.

However, since an optimum concentration varies depending on the type of the probe molecule, when a probe molecule other than methylene blue is used, it is necessary to grasp an optimum concentration range in advance by the same procedure as that of Measurement Example 2 described later.

Further, the amount of the probe molecule solution to be used is preferably an amount that allows the zeolite membrane to be appropriately immersed in the probe molecule solution. When the amount of the probe molecule solution to be used is too small, the number of probe molecules in the solution is insufficient, and the $A_e$ value is underestimated. On the other hand, when the amount of the probe molecule solution to be used is too large, it is difficult to understand the concentration change of the probe molecule solution before and after the adsorption, and an $A_e$ value including many errors is obtained. Therefore, the amount [L/m$^2$] of the probe molecule solution to be used per apparent membrane area is preferably at least 10 or more and at most 20 or less.

A temperature of the molecular probe solution during the evaluation is preferably controlled near room temperature. The temperature of the probe solution is preferably 17°C to 20°C. When the temperature exceeds the temperature range, the adsorption amount decreases, and the $A_e$ value may be underestimated. On the other hand, when the temperature is lower than the temperature range, the multimolecular layer adsorption may occur, and the $A_e$ value may be overestimated.

The type of the zeolite membrane to be evaluated is not particularly limited, and as long as a molecular probe larger than an intrinsic pore diameter of the zeolite is used, the developed membrane area of the entire zeolite membrane can be evaluated regardless of whether the zeolite membrane is fired or not fired.

A shape of the zeolite membrane to be evaluated is not particularly limited, and examples thereof include a cylindrical shape, a flat plate shape, and a honeycomb shape. During the evaluation, it is desirable to treat a part other than the zeolite membrane such that the part does not come into contact with the probe molecules as much as possible. For example, in the case where a zeolite membrane is formed on an outer circumference of a cylindrical support, it is desirable to seal an end portion using a silicon plug, a glass sealing material, and the like to prevent the probe molecular solution from entering the inside of the cylinder. When the probe molecules are excessively brought into contact with the part other than the zeolite membrane, the $A_e$ value may be overestimated.

The zeolite membrane after the evaluation can be extracted and regenerated by being brought into contact with a solvent having a high affinity for the probe molecules. A solvent for extraction and washing is preferably an alcohol such as ethanol, and more preferably acetone which exhibits high detergency against many fats and oils. The zeolite membrane having a clean membrane surface can be recovered by appropriately performing washing while exchanging the extract. Alternatively, the zeolite membrane having a clean membrane surface can be recovered by heating the zeolite membrane to 350°C or higher to thermally decompose the probe molecules.

A zeolite membrane having an $A_e/A_0$ value of less than 2 or more than 20 does not exhibit separation performance and is a defective membrane. A method of inspection using a molecular probe and using the $A_e/A_0$ value as a parameter makes it possible to accurately and easily evaluate characteristics such as the denseness of the zeolite membrane. Here, in the zeolite membrane manufactured using the organic structure directing agent, efficient membrane manufacturing can be realized by applying the technique to the unfired zeolite membrane before the organic structure directing agent is removed. In the manufacturing process of the zeolite membrane, membrane defects may occur due to factors such as insufficient growth of a zeolite layer. Since such a defective membrane does not exhibit separation performance even after the organic structure directing agent is removed, it is desirable that the defective membrane is discarded before the heat treatment from the viewpoint of reducing thermal energy required for the firing. An unfired zeolite membrane having an $A_e/A_0$ value of 2 or more and 20 or less is less likely to be a defective membrane due to insufficient growth of a zeolite layer and the like. Thus, by performing sorting according to this method, the heat treatment can be performed after removing the defective membrane, and thus the productivity of the product can be improved.

Examples and Comparative Examples of the zeolite membrane composites on which the CHA-type zeolite membrane and the AFX-type zeolite membrane are mounted are shown below, and test results of membrane separation and concentration tests are further shown. Further, a measurement example of the developed membrane area $A_e$ using the molecular probe and the like are shown.

## (1) Manufacturing of Zeolite Membrane Composite Mounted with CHA-type Zeolite Membrane

A columnar alumina support (manufactured by Hitachi Zosen Corporation, diameter: 16 mm, length: 1000 mm, average pore diameter: 0.3 $\mu$m to 1.2 $\mu$m) was prepared, and a mixture of seed crystals having two types of dispersion peaks was attached to the surface thereof. The seed crystals were prepared in advance by the following method using N,N,N-trimethyl-1-adamantaneammonium hydroxide (TMAdaOH) as an organic structure directing agent.

A 40 wt% colloidal silica (LUDOX(R) HS-40, manufactured by Sigma-Aldrich) was used as a $SiO_2$ source, a 25 wt% TMAdaOH aqueous solution (Zeogen(™) 2825, manufactured by SACHEM) was used as an organic structure directing agent, and ammonium fluoride (017-03095, manufactured by FUJIFILM Wako Pure Chemical Corporation) was used as a fluorine source. With reference to the procedure described in Reference Literature (RSC Advances Journal, Vol. 5, pp. 27087 to 27090, (2015)), a zeolite precursor having a molar composition of $1.0SiO_2:0.5TMAdaOH:0.5NH_4F:5.0H_2O$ was prepared.

Usually, a CHA crystal of 5 $\mu$m to 10 $\mu$m is obtained by subjecting the composition to hydrothermal synthesis (150°C to 180°C, 3 h to 48 h). The CHA crystal prepared in advance is contained in the zeolite precursor, and the zeolite precursor is hydrothermally synthesized in the same procedure as usual to obtain a crystal having a size of 1 $\mu$m or less. A smaller crystal can be synthesized as a total amount of the CHA crystal contained increases.

Specifically, 141.2 g of the TMAdaOH aqueous solution, 50.0 g of colloidal silica, 6.2 g of $NH_4F$, and a predetermined amount of CHA seed crystal were mixed, and water was evaporated until a target composition was obtained. The evaporation of water was performed by heating and concentrating in a dryer at 80°C. Here, when 2 wt% of the CHA crystal with respect to $SiO_2$ in the zeolite precursor is contained and subjected to hydrothermal synthesis, a seed crystal of 1 $\mu$m is obtained, and when 10 wt% of the CHA crystal is contained and subjected to hydrothermal synthesis, a seed crystal of 0.3 $\mu$m is obtained.

A smaller seed crystal and a larger seed crystal were prepared by changing an addition amount of the CHA seed crystal and performing hydrothermal synthesis. The number average particle diameter of the smaller seed crystal was set to four types of 0.2 $\mu$m, 0.3 $\mu$m, 0.5 $\mu$m, and 0.6 $\mu$m. The number average particle diameter of the larger seed crystal was set to three types of 0.8 $\mu$m, 0.9 $\mu$m, and 1.2 $\mu$m.

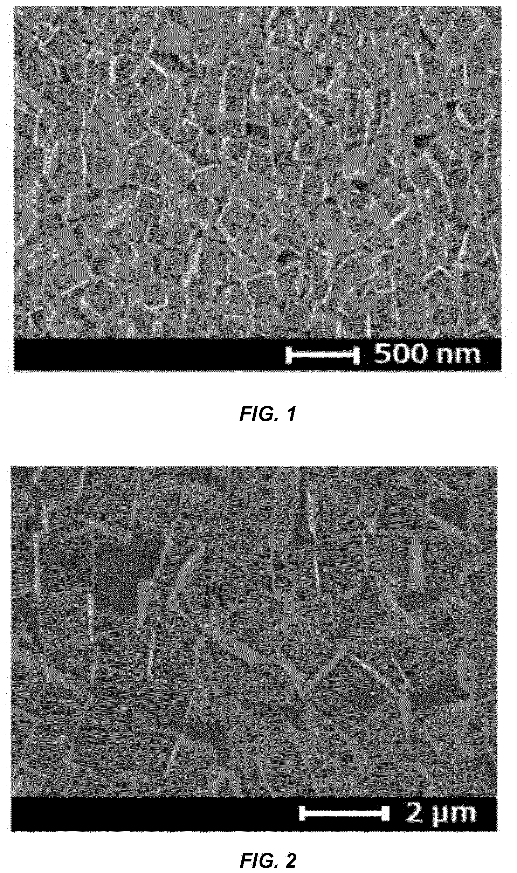

FIG. 1 is a scanning electron microscope (SEM) photograph of seed crystals having a smaller average particle diameter among CHA-type zeolite seed crystals used in Examples 1 to 4 and 7 to 12 and Comparative Examples 1 and 4 to 7. The number average particle diameter is 0.3 $\mu$m, and the particle size is uniform in a cubic shape. FIG. 2 is a SEM photograph of seed crystals having a larger average particle diameter among CHA-type zeolite seed crystals used in Examples 1 to 6 and 9 to 10. The number average particle diameter is 1.2 $\mu$m, and the particle size is also uniform in a cubic shape.

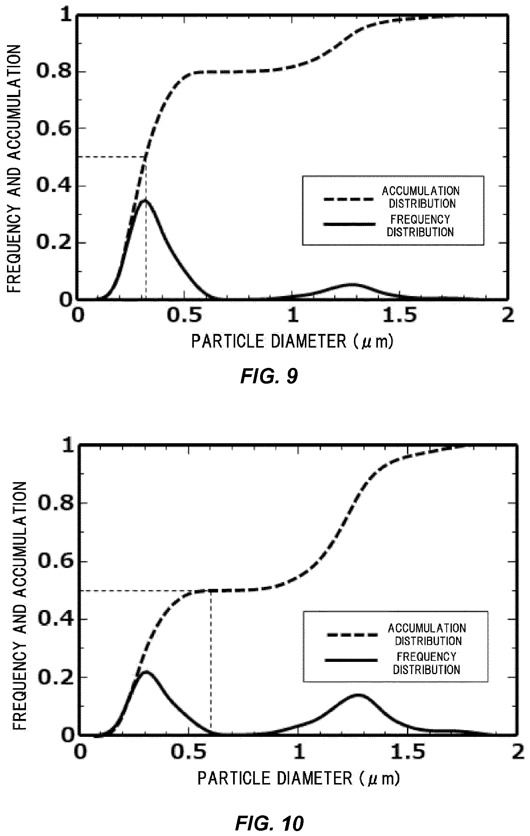

FIG. 9 is a volume particle size distribution showing a blend state of CHA-type zeolite seed crystals different in size used in Examples 1, 9, and 10. The average particle diameter of the seed crystals having a smaller number average particle diameter was 0.3 $\mu$m, the average particle diameter of the seed crystals having a larger number average particle diameter was 1.2 $\mu$m, and a ratio of the seed crystals having a smaller number average particle diameter to all seed crystals was 80%. The CV values are 9.2% and 8.7%, both of which are 10% or less, and there is no large variation.

FIG. 10 is a volume particle size distribution showing a blend state of CHA-type zeolite seed crystals different in size used in Example 4. The average particle diameter of the seed crystals having a smaller number average particle diameter was 0.3 μm, the average particle diameter of the seed crystals having a larger number average particle diameter was 1.2 μm, and a ratio of the seed crystals having a smaller number average particle diameter to all seed crystals was 50%, which was close to a lower limit value of 45%.

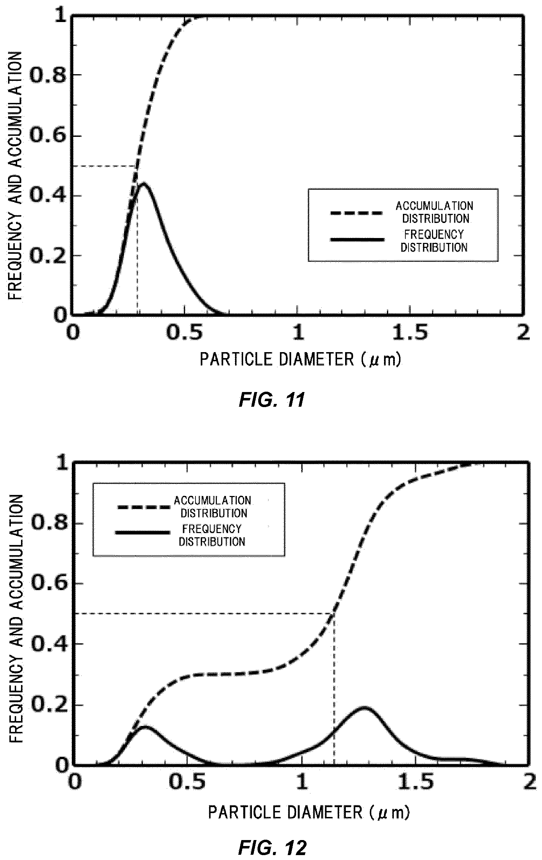

FIG. 11 shows a volume particle size distribution of a CHA-type zeolite seed crystal used in Comparative Example 1. The seed crystal had a distribution having a single average particle diameter, and the number average particle diameter was 0.3 μm.

FIG. 12 is a volume particle size distribution showing a blend state of CHA-type zeolite seed crystals different in size used in Comparative Example 6. The average particle diameter of the seed crystals having a smaller number average particle diameter was 0.3 μm, the average particle diameter of the seed crystals having a larger number average particle diameter was 1.2 μm, and a ratio of the seed crystals having a smaller number average particle diameter to all seed crystals was 30%, which was a value lower than the lower limit value of 45%.

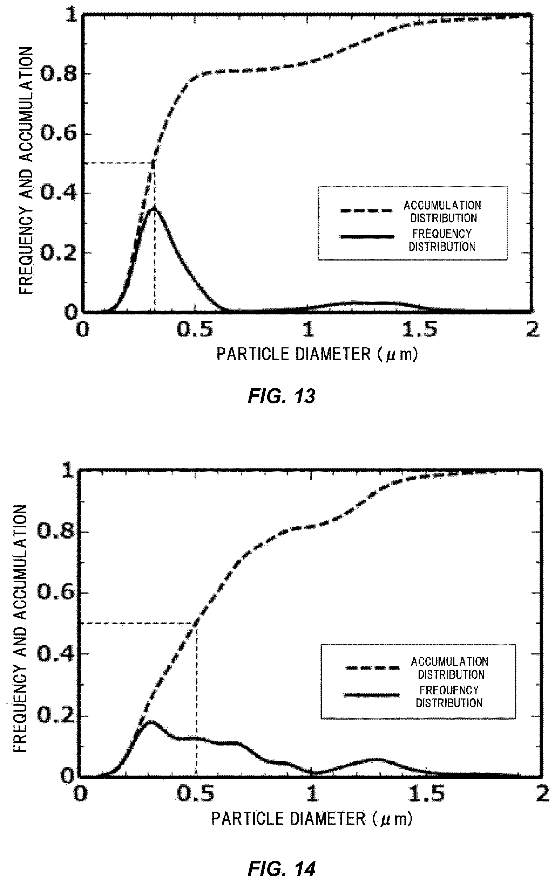

FIG. 13 is a volume particle size distribution showing a blend state of CHA-type zeolite seed crystals different in size used in Comparative Example 7. The average particle diameter of the seed crystals having a smaller number average particle diameter was 0.3 μm, the average particle diameter of the seed crystals having a larger number average particle diameter was 1.1 μm, and a ratio of the seed crystals having a smaller number average particle diameter to all seed crystals was 80%. The CV value of the seed crystals having a larger number average particle diameter was 18.8%, which was more than 12%, indicating a large variation.

FIG. 14 is a volume particle size distribution showing a blend state of CHA-type zeolite seed crystals different in size used in Comparative Example 8. The average particle diameter of the seed crystals having a smaller number average particle diameter was 0.3 μm, the average particle diameter of the seed crystals having a larger number average particle diameter was 1.2 μm, and a ratio of the seed crystals having a smaller number average particle diameter to all seed crystals was 80%. The CV value of the seed crystals having a smaller number average particle diameter was 15.1%, which was more than 12%, indicating a large variation.

Water was added to various mixed or non-mixed crystals to prepare 0.1 wt% of a seed crystal dispersion liquid. A support was immersed in the seed crystal dispersion liquid for 1 minute, and then the support was taken out from the liquid at a vertical pulling rate of 2.5 mm/s and dried overnight at room temperature, thereby supporting the seed crystal inside the support and on the surface of the support. The type and the mixing ratio of the seed crystal and the combination with the support are as shown in Table 1.

Next, a secondary growth solution for forming a zeolite membrane was prepared by the following method. TMAdaOH, ion exchanged water, NaOH, and HSZ-360 and HSZ-390, i.e., FAU-type zeolite, were added to prepare a secondary growth solution having a molar composition of $TMAdaOH/SiO_2 = 0.10$, $NaOH/SiO_2 = 0.16$, $H_2O/SiO_2 = 150$, and Si/Al = 10 to 120.

Next, a porous support made of alumina to which a seed crystal was attached was disposed in an inner cylinder made of a fluororesin in an autoclave, the inner cylinder was filled with the secondary growth solution, the autoclave was sealed, and hydrothermal synthesis was performed at 160°C for 16 hours. Accordingly, a CHA-type zeolite membrane was formed on the support by hydrothermal synthesis in the secondary growth solution. Here, the Si/Al ratio on the surface of the zeolite membrane was controlled by manipulating a Si/Al ratio in the secondary growth solution. The Si/Al ratio on the surface of the zeolite membrane and the Si/Al ratio in the secondary growth solution were substantially the same values.

Thereafter, the autoclave was cooled, and the support having the formed zeolite membrane thereon was taken out from the inner cylinder and washed with ion exchanged water. Finally, in order to remove the organic structure directing agent, firing was performed in an electric furnace at 500°C for 10 hours.

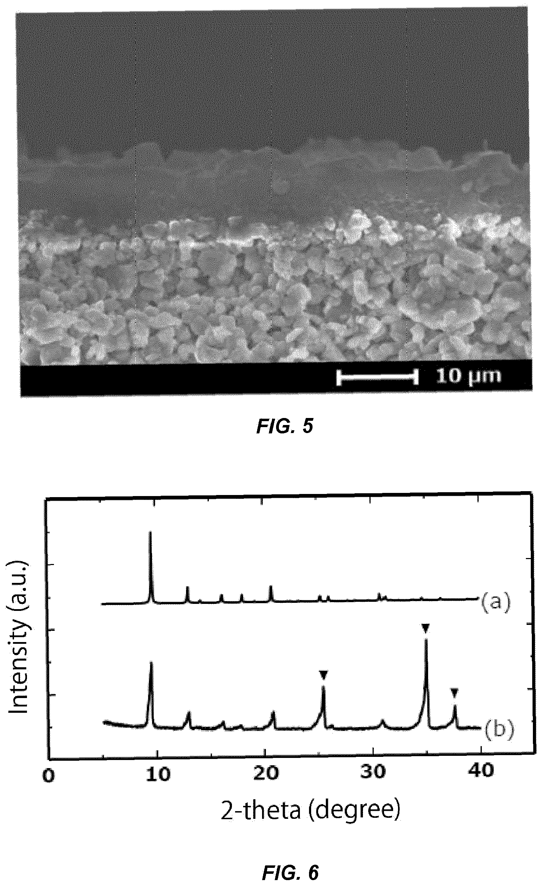

FIG. 5 shows an electron microscope image of a cross section of the zeolite membrane composite obtained in Example 1. It can be seen from FIG. 5 that the surface of the support is covered with a dense zeolite membrane without gaps. (a) in FIG. 6 is an X-ray diffraction pattern of a CHA-type zeolite obtained by molecular simulation, and (b) in FIG. 6 is an X-ray diffraction pattern of the surface of the obtained zeolite membrane. According to the X-ray diffraction pattern in (b) in FIG. 6, it is seen that the zeolite membrane formed on the porous support is a zeolite membrane of the CHA-type crystal. In X-ray diffraction measurement, the surface of the zeolite membrane was subjected to the X-ray diffraction measurement using Ultima IV manufactured by Rigaku Corporation.

(2) Manufacturing of Zeolite Membrane Composite Mounted with AFX-type Zeolite Membrane

A seed crystal was produced by the following method. As a silica source and an alumina source, FAU-type zeolite powder (HSZ-320HAA, HSZ-360HUA, HSZ-390HUA, manufactured by Tosoh Corporation) was used. As an alkali source, sodium hydroxide (granular solid, manufactured by Wako Pure Chemical Corporation) was used. As an organic structure directing agent, 1,4-bis(1-azabicyclo[2.2.2]octane)butyl bromide (hereinafter referred to as [Dab-4]$Br_2$) and 1,4-bis(1-azabicyclo[2.2.2]octane)butyl hydroxide (hereinafter referred to as [Dab-4] $(OH)_2$) were used. A procedure for preparing [Dab-4]$Br_2$ and [Dab-4]$(OH)_2$ is shown below. A solution A in which 128 g of tetramethylene bromide was dissolved in 66 g of methanol and a solution B in which 200 g of triethylenediamine was dissolved in 200 g of methanol were mixed under ice-cooling. Subsequently, the precipitated solid was decanted with diethyl ether, the solid was recovered, and then dried under reduced pressure to prepare [Dab-4]$Br_2$. Subsequently, an aqueous solution of [Dab-4]$Br_2$ was prepared and subjected to ion exchange by being exposed to an ion exchange resin (DOWEX™ Monosphere™ 550A, strongly basic I-type anion exchange resin) manufactured by Dow Chemical Company, thereby preparing about 30 mass% of an aqueous solution of [Dab-4]$(OH)_2$.

FAU-type zeolite powder, sodium hydroxide, [Dab-4]$Br_2$, and ion exchanged water were added, and a zeolite precursor having a molar composition of $SiO_2$:$Al_2O_3$:$Na_2O$: [Dab-4]$Br_2$:$H_2O$ = 1.0:0.0337:0.1:0.2:30 was prepared. The zeolite precursor was charged into a stainless steel pressure-resistant container with an inner cylinder made of fluororesin and having an internal volume of 100 ml, and heated in a sealed state at 140°C for 4 days. Thereafter, the product is filtered, washed, and dried, and then subjected to a heat treatment at 500°C for 24 hours to obtain AFX-type zeolite powder. The AFX-type zeolite powder obtained here had a major axis diameter of about 3.5 $\mu$m and a Si/Al ratio of 4.6.

Since this powder is too large as a seed crystal used for membrane formation, the powder cannot be supported on pores of the support, and an AFX-type zeolite membrane cannot be obtained. Therefore, the particle diameter of the AFX-type zeolite seed crystal was adjusted by the same method as that of the CHA-type zeolite seed crystal. However, since a total amount of crystals required for fine granulation varied depending on a zeolite structure, a precursor composition, and a raw material, the influence of an added amount of crystals on the particle diameter was also investigated in the seed crystal of the AFX membrane. As a result of the examination, since a number average particle diameter of 0.8 $\mu$m was obtained by addition of 0.5 wt% and a number average particle diameter of 0.2 $\mu$m was obtained by addition of 5 wt%, these number average particle diameters were used for a large seed crystal and a small seed crystal. There was no change in crystal composition (Si/Al ratio) along with fine granulation.

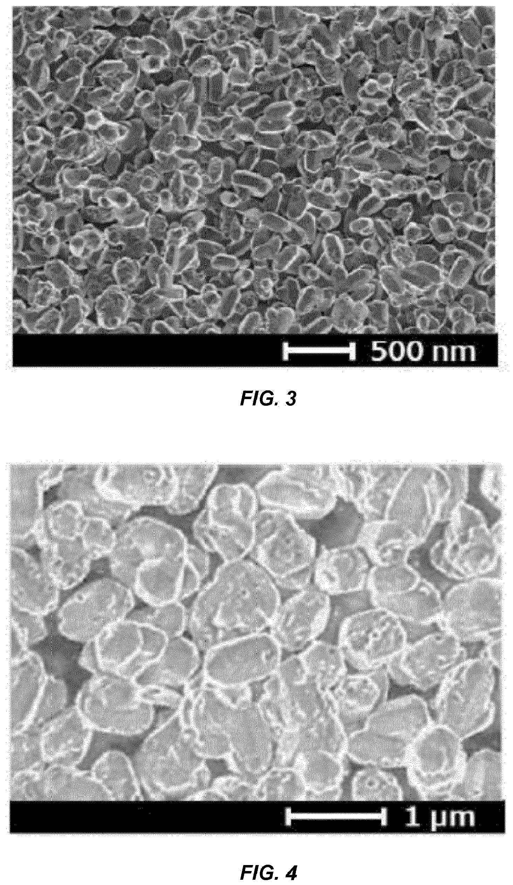

FIG. 3 is a SEM photograph of seed crystals having a smaller average particle diameter among AFX-type zeolite seed crystals used in Examples 13 to 15 and Comparative Example 10. The number average particle diameter is 0.2 $\mu$m, and the particle sizes are uniform. FIG. 4 is a SEM photograph of seed crystals having a larger average particle diameter among AFX-type zeolite seed crystals used in Examples 13 to 15 and Comparative Examples 9 to 10. The number average particle diameter is 0.8 $\mu$m, and the particle sizes are uniform.

Seed crystals having various particle diameters obtained by the above method were appropriately mixed, and water was added thereto to prepare a 0.1 wt% of a seed crystal dispersion liquid. A support was immersed in the seed crystal dispersion liquid for 1 minute, and then the support was taken out from the liquid at a vertical pulling rate of 2.5 mm/s and dried overnight at room temperature, thereby supporting the seed crystals inside the support and on the surface of the support.

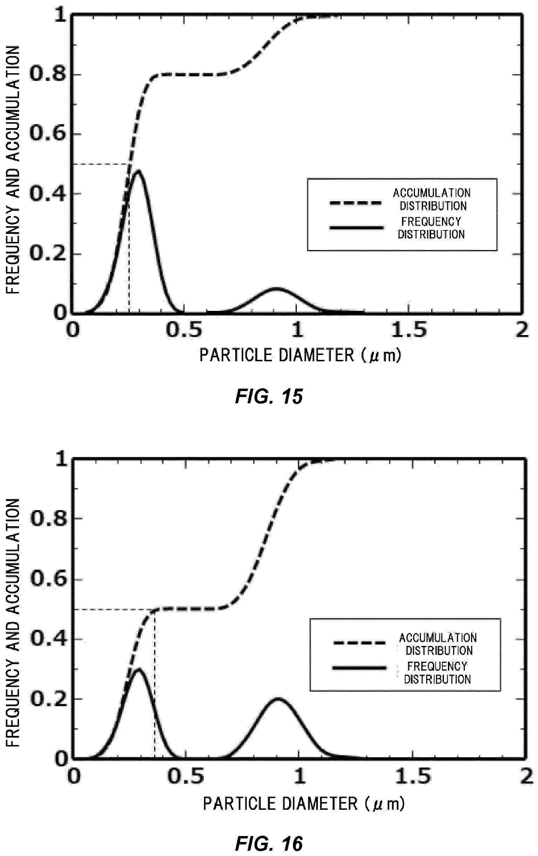

FIG. 15 is a volume particle size distribution showing a blend state of AFX-type zeolite seed crystals different in size used in Example 13. The average particle diameter of the seed crystals having a smaller number average particle diameter was 0.2 $\mu$m, the average particle diameter of the seed crystals having a larger number average particle diameter was 0.8 $\mu$m, and a ratio of the seed crystal having a smaller number average particle diameter to all seed crystals was 80%.

FIG. 16 is a volume particle size distribution showing a blend state of AFX-type zeolite seed crystals different in size used in Example 15. The average particle diameter of the seed crystals having a smaller number average particle diameter was 0.2 $\mu$m, the average particle diameter of the seed crystals having a larger number average particle diameter was 0.8 $\mu$m, and a ratio of the seed crystals having a smaller number average particle diameter to all seed crystals was 50%, which was close to the lower limit value of 45%.

Next, a secondary growth solution for forming a zeolite membrane was prepared by the following method. [Dab-4]$(OH)_2$, ion exchanged water, NaOH, and HSZ-320HAA, HSZ-360, and HSZ-390, i.e., FAU-type zeolite, were added to prepare a secondary growth solution having a molar composition of [Dab-4] $(OH)_2$/$SiO_2$ = 0.10, $Na_2O$/$SiO_2$ = 0.30, $H_2O$/$SiO_2$ = 100, and $SiO_2$/$Al_2O_3$ = 12 to 24. A support supporting the seed crystal was immersed therein, and hydrothermal synthesis was performed at 160°C for 24 hours. Thereafter, a heat treatment was performed for 24 hours under a temperature of 500°C to remove the organic structure directing agent.

For example, membrane formation of the AFX-type zeolite membrane shown in Example 13 in Table 1 by hydrothermal synthesis was performed as follows. The AFX-type zeolite membrane was prepared by hydrothermal synthesis using a precursor solution adjusted to [Dab-4]$(OH)_2$/$SiO_2$ = 0.10, $Na_2O$/$SiO_2$ = 0.30, $H_2O$/$SiO_2$ = 100, and $SiO_2$/$Al_2O_3$ = 12. In XRD analysis, a diffraction pattern derived from an AFX structure was obtained. The Si/Al ratio on the membrane surface obtained by XPS analysis was 10.8, and an AFX-type zeolite membrane having a high silica structure was obtained.

For example, membrane formation of the AFX-type zeolite membrane shown in Example 14 in Table 1 by hydrothermal synthesis was performed as follows. The AFX-type zeolite membrane was prepared by hydrothermal synthesis using a precursor solution adjusted to [Dab-4]$(OH)_2$/$SiO_2$ = 0.10, $Na_2O$/$SiO_2$ = 0.30, $H_2O$/$SiO_2$ = 100, and

$SiO_2/Al_2O_3$ = 18. In XRD analysis, a diffraction pattern derived from an AFX structure was obtained. The Si/Al ratio on the membrane surface obtained by XPS analysis was 15.0, and an AFX-type zeolite membrane having a high silica structure was obtained.

For example, membrane formation of the AFX-type zeolite membrane shown in Example 15 in Table 1 by hydrothermal synthesis was performed as follows. The AFX-type zeolite membrane was prepared by hydrothermal synthesis using a precursor solution adjusted to [Dab-4] $(OH)_2/SiO_2$ = 0.10, $Na_2O/SiO_2$ = 0.30, $H_2O/SiO_2$ = 100, and $SiO_2/Al_2O_3$ = 24. In XRD analysis, a diffraction pattern derived from an AFX structure was confirmed, and the AFX-type zeolite membrane was obtained. The Si/Al ratio on the membrane surface obtained by XPS analysis was 20.8, and an AFX-type zeolite membrane having a silica structure higher than that of Example 13 was obtained.

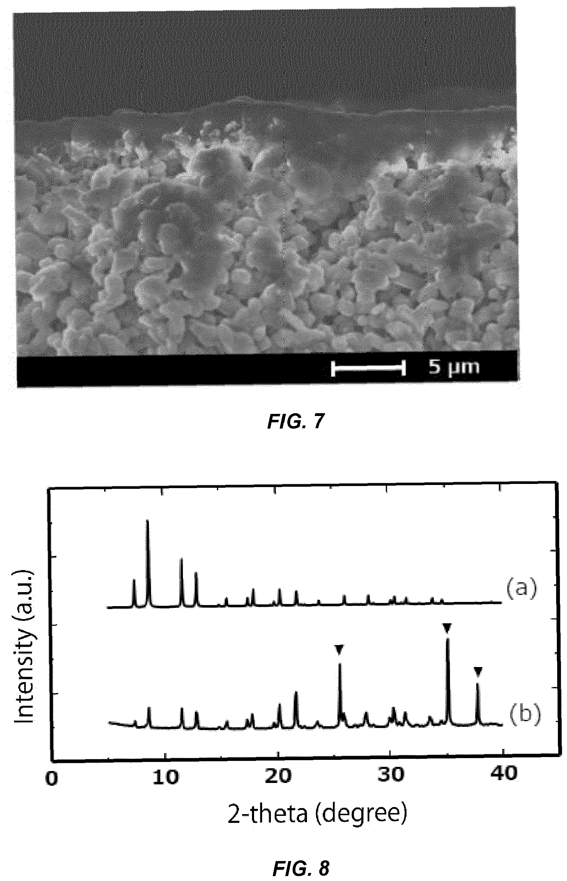

FIG. 7 shows an electron microscope image of a cross section of the AFX-type zeolite membrane obtained in Example 13. It can be seen from FIG. 7 that the surface of the support is covered with a dense zeolite membrane without gaps. Further, a crystal layer of 3 μm to 5 μm was observed. (a) in FIG. 8 is an X-ray diffraction pattern of an AFX-type zeolite obtained by molecular simulation, and (b) in FIG. 8 is an X-ray diffraction pattern of the surface of the obtained zeolite membrane. According to the X-ray diffraction pattern in (b) in FIG. 8, it is seen that the zeolite membrane formed on the porous support is a zeolite membrane of the AFX-type crystal. The X-ray diffraction measurement was performed using Ultima IV manufactured by Rigaku Corporation.

On the other hand, for the membrane formation of an AFX-type zeolite membrane shown in Comparative Example 10 in Table 1, the AFX-type zeolite membrane was prepared in the same procedure as in Example 13 except that [Dab-4]$Br_2$ was used as the organic structure directing agent. In XRD analysis, a diffraction pattern derived from an AFX structure was obtained, and the AFX-type zeolite membrane was obtained. However, the Si/Al ratio on the membrane surface obtained by the XPS analysis was 4.8, and a high silica structure was not obtained. It is shown that, in order to obtain the AFX-type zeolite membrane having a high silica structure, it is desirable to use [Dab-4]$(OH)_2$ obtained by ion exchange of [Dab-4]$Br_2$.

[Separation Performance Test]

Each of zeolite membrane composites manufactured under various conditions was evaluated as follows using a pervaporation method. A solution to be separated was charged into a sealable measurement container, the zeolite membrane composite was disposed, then the inside of the zeolite membrane composite was depressurized by a vacuum pump P, and a pressure difference between the inside and the outside of the zeolite separation membrane was set to 1 atm. Next, the gas permeated through the zeolite membrane composite was collected by a cold trap, and a mass of the obtained liquid was measured. Further, a component concentration of the permeated liquid was measured by gas chromatography. The temperature was 130°C, and an acetic acid/water mixture having a water content of 30 mass% and an acetic acid/water mixture having a water content of 5 mass% were used as liquids to be separated. From the measurement results, a permeation flow rate (kg/m$^2$·h) and a separation factor were calculated.

[Characteristics of Various Zeolite Membranes and Results of Separation Performance Test]

Results of evaluation of the separation performance of zeolite membrane composites on which various zeolite membranes are mounted are shown in Table 1 below.

[Table 1]

| | Zeolite membrane | | | | Seed crystal | | | | | | | | Porous support | | Separation performance of 30% hydrous acetic acid under 130°C | | Separation performance of 5% hydrous acetic acid under 130°C | |
|---|---|---|---|---|---|---|---|---|---|---|---|---|---|---|---|---|---|---|
| | Crystal form | Surface Si/Al | $A_e/A_0$ | MB adsorption amount (Molecules/m²) | Small crystal diameter (μm) | CV value (%) of small seed crystal | Small diameter/pore diameter of support | Large crystal diameter (μm) | Large diameter/pore diameter of support | CV value (%) of large seed crystal | Small crystal diameter/large crystal diameter | Ratio (%) of Small crystal | Pore diameter (μm) of support | Roughness Ra (μm) of support | Water permeation flow rate (kg/m²·h) | Separation factor | Water permeation flow rate (kg/m²·h) | Separation factor |
| Example 1 | CHA | 15.8 | 5.5 | $4.2 \times 10^{18}$ | 0.3 | 9.2% | 0.25 | 1.2 | 1.00 | 8.7% | 0.25 | 80% | 1.2 | 1.2 to 1.6 | 6.6 | > 10,000 | 2.8 | > 10,000 |
| Example 2 | CHA | 32.2 | 2.8 | $2.0 \times 10^{18}$ | 0.3 | 9.2% | 0.25 | 1.2 | 1.00 | 8.7% | 0.25 | 90% | 1.2 | 1.2 to 1.6 | 8.3 | > 10,000 | 1.4 | > 10,000 |
| Example 3 | CHA | 46.6 | 15.2 | $12 \times 10^{19}$ | 0.3 | 9.2% | 0.25 | 1.2 | 1.00 | 8.7% | 0.25 | 70% | 1.2 | 1.2 to 1.6 | 6.2 | > 10,000 | 2.2 | > 10,000 |
| Example 4 | CHA | 15.5 | 19.6 | $15 \times 10_{19}$ | 0.3 | 9.2% | 0.25 | 1.2 | 1.00 | 8.7% | 0.25 | 50% | 1.2 | 1.2 to 1.6 | 9.5 | 1050 | 4.2 | 1050 |
| Example 5 | CHA | 15.3 | 6.8 | $2.6 \times 10^{18}$ | 0.2 | 6.2% | 0.17 | 1.2 | 1.00 | 8.7% | 0.17 | 80% | 1.2 | 1.2 to 1.6 | 8.8 | > 10,000 | 4.5 | > 10,000 |
| Example 6 | CHA | 15.6 | 3.1 | $2.4 \times 10^{16}$ | 0.6 | 9.6% | 0.50 | 1.2 | 1.00 | 8.7% | 0.50 | 80% | 1.2 | 1.2 to 1.6 | 6.5 | > 10,000 | 3.3 | > 10,000 |
| Example 7 | CHA | 15.2 | 3.4 | $2.9 \times 10^{18}$ | 0.3 | 9.2% | 0.25 | 0.9 | 0.75 | 7.9% | 0.33 | 80% | 1.2 | 1.2 to 1.6 | 8.5 | > 10,000 | 3.3 | > 10,000 |
| Example 8 | CHA | 15.0 | 2.0 | $16 \times 10^{18}$ | 0.3 | 9.2% | 0.25 | 0.8 | 0.67 | 9.1% | 0.38 | 80% | 1.2 | 1.2 to 1.6 | 3.3 | > 10,000 | 1.1 | > 10,000 |
| Example 9 | CHA | 14.9 | 6.2 | $4.8 \times 10^{18}$ | 0.3 | 9.2% | 0.25 | 1.2 | 1.00 | 8.7% | 0.25 | 80% | 1.2 | 1.6 to 2.0 | 7.1 | > 10,000 | 3.2 | > 10,000 |
| Example 10 | CHA | 15.5 | 7.5 | $5.8 \times 10^{18}$ | 0.3 | 9.2% | 0.25 | 1.2 | 1.00 | 8.7% | 0.25 | 80% | 1.2 | 2.0 to 2.4 | 7.6 | > 10,000 | 3.5 | > 10,000 |
| Example 11 | CHA | 50.0 | 10.2 | $7.8 \times 10^{18}$ | 0.3 | 9.2% | 0.38 | 0.8 | 1.00 | 9.1% | 0.38 | 80% | 0.8 | 1.2 to 1.6 | 9.6 | > 10,000 | 2 | > 10,000 |
| Example 12 | CHA | 100.0 | 9.9 | $7.6 \times 10^{18}$ | 0.3 | 9.2% | 0.38 | 0.8 | 1.00 | 9.1% | 0.38 | 80% | 0.8 | 1.2 to 1.6 | 12.5 | > 10,000 | 2.4 | > 10,000 |
| Example 13 | AFX | 10.8 | 2.8 | $2.2 \times 10^{18}$ | 0.2 | 6.2% | 0.25 | 0.8 | 1.00 | 9.6% | 0.25 | 80% | 0.8 | 1.2 to 1.6 | 7.2 | > 10,000 | 3.2 | > 10,000 |
| Example 14 | AFX | 15.0 | 10.5 | $81 \times 10^{18}$ | 0.2 | 6.2% | 0.25 | 0.8 | 1.00 | 9.6% | 0.25 | 70% | 0.8 | 1.2 to 1.6 | 8.2 | > 10,000 | 3 | > 10,000 |

| | Zeolite membrane | | | | Seed crystal | | | | | | | | Porous support | | Separation performance of 30% hydrous acetic acid under 130°C | | Separation performance of 5% hydrous acetic acid under 130°C | |
|---|---|---|---|---|---|---|---|---|---|---|---|---|---|---|---|---|---|---|
| | Crystal form | Surface Si/Al | $A_e/A_0$ | MB adsorption amount (Molecules/$m^2$) | Small crystal diameter ($\mu$m) | CV value (%) of small seed crystal | Small diameter/pore diameter of support | Large crystal diameter ($\mu$m) | Large diameter/pore diameter of support | CV value (%) of large seed crystal | Small crystal diameter/large crystal diameter | Ratio (%) of Small crystal | Pore diameter ($\mu$m) of support | Roughness Ra ($\mu$m) of support | Water permeation flow rate (kg/$m^2 \cdot$h) | Separation factor | Water permeation flow rate (kg/$m^2 \cdot$h) | Separation factor |
| Example 15 | AFX | 20.8 | 19.4 | $15 \times 10^{19}$ | 0.2 | 6.2% | 0.25 | 0.8 | 1.00 | 9.6% | 0.25 | 50% | 0.8 | 1.2 to 1.6 | 9.6 | 7120 | 3.6 | 3080 |
| Comparative Example 1 | CHA | 10.5 | 1.6 | $1.2 \times 10^{18}$ | 0.3 | 9.2% | 0.60 | - | - | - | - | - | 0.5 | to 1.2 | 2.8 | > 10,000 | 50 < | 1 |
| Comparative Example 2 | CHA | 15.3 | 1.3 | $1.0 \times 10^{18}$ | 0.5 | 7.6% | 1.00 | - | - | - | - | - | 0.5 | to 1.2 | 2.2 | > 10,000 | 0.5 | > 10,000 |
| Comparative Example 3 | CHA | 30.3 | 1.8 | $1.4 \times 10^{18}$ | 0.2 | 6.2% | 0.67 | - | - | - | - | - | 0.3 | to 1.2 | 3.5 | > 10,000 | < 0.1 | > 10,000 |
| Comparative Example 4 | CHA | 50.0 | 1.5 | $1.2 \times 10^{18}$ | 0.3 | 9.2% | 0.38 | - | - | - | - | - | 0.8 | to 1.2 | 9.9 | 155 | 1 | 3200 |
| Comparative Example 5 | CHA | 100.0 | 1.6 | $1.2 \times 10^{18}$ | 0.3 | 9.2% | 0.38 | - | - | - | - | - | 0.8 | to 1.2 | 14.8 | 20 | 0.8 | 6800 |
| Comparative Example 6 | CHA | 15.2 | 35.6 | $2.7 \times 10^{19}$ | 0.3 | 9.2% | 0.25 | 1.2 | 1.00 | 6.7% | 0.25 | 30% | 1.2 | 1.2 to 1.6 | 50 < | 1 | 50 < | 1 |

(continued)

| | Zeolite membrane | | | | Seed crystal | | | | | | | | Porous support | | Separation performance of 30% hydrous acetic acid under 130°C | | Separation performance of 5% hydrous acetic acid under 130°C | |
|---|---|---|---|---|---|---|---|---|---|---|---|---|---|---|---|---|---|---|
| | Crystal form | Surface Si/Al | $A_e/A_0$ | MB adsorption amount (Molecules/m$^2$) | Small crystal diameter (μm) | CV value (%) of small seed crystal | Small diameter/pore diameter of support | Large crystal diameter (μm) | Large diameter/pore diameter of support | CV value (%) of large seed crystal | Small crystal diameter/large crystal diameter | Ratio (%) of Small crystal | Pore diameter (μm) of support | Roughness Ra (μm) of support | Water permeation flow rate (kg/m$^2$·h) | Separation factor | Water permeation flow rate (kg/m$^2$·h) | Separation factor |
| Comparative Example 7 | CHA | 15.0 | 30.2 | $2.3 \times 10^{19}$ | 0.3 | 9.2% | 0.25 | 1.1 | 0.92 | 18.8% | 0.27 | 80% | 1.2 | 1.2 to 1.6 | 50 < | 1 | 50 < | 1 |
| Comparative Example 8 | CHA | 15.2 | 26.4 | $2.0 \times 10^{19}$ | 0.3 | 15.1% | 0.25 | 1.2 | 1.00 | 6.7% | 0.25 | 80% | 1.2 | 1.2 to 1.6 | 50 < | 1 | 50 < | 1 |
| Comparative Example 9 | AFX | 14.7 | 28.6 | $2.2 \times 10^{19}$ | 0.2 | 8.5% | 0.25 | 0.8 | 1.00 | 9.6% | 0.25 | 30% | 0.8 | 1.2 to 1.6 | 50 < | 1 | 50 < | 1 |
| Comparative Example 10 | AFX | 4.8 | 2.0 | $1.5 \times 10^{18}$ | 0.2 | 6.2% | 0.20 | 0.8 | 0.80 | 9.6% | 0.25 | 90% | 1.0 | 1.2 to 1.6 | 50 < | 1 | 50 < | 1 |

Table 1 shows the following configurations. Examples 1 to 12 and Comparative Examples 1 to 8 are each a zeolite membrane composite mounted with the CHA-type zeolite membrane, and Examples 13 to 15 and Comparative Examples 9 and 10 are each a zeolite membrane composite mounted with the AFX-type zeolite membrane. In each of Examples and Comparative Examples, a zeolite membrane composite, including a porous support and an aluminosilicate zeolite membrane having a framework density of 10 or more and 17 or less on a surface of the porous support, is formed.

The Si/Al molar ratio on the surface of the formed zeolite membrane was 4.8, which was less than 5, only in Comparative Example 10, and was 5 or more in all other examples. Among these, the largest molar ratio was 100 in Example 12 and Comparative Example 5, and the smallest molar ratio was 10.5 in Comparative Example 1. In all Examples and Comparative Examples except for Comparative Example 10, a high silica zeolite membrane having a Si/Al molar ratio of 5 or more was obtained.

The ratio ($A_e/A_0$) of the developed membrane area $A_e$ to the apparent membrane area $A_0$ was 2 or more and 20 or less in all of Examples 1 to 15, the largest was 19.6 in Example 4, and the smallest was 2.0 in Example 8. The ratio ($A_e/A_0$) was less than 2.0 in all of Comparative Examples 1 to 5, the ratio ($A_e/A_0$) was more than 20 in all of Comparative Examples 6 to 9, and the ratio ($A_e/A_0$) was 2.0 in Comparative Example 10.

The number average particle diameter of the smaller seed crystal was within a range of 0.2 $\mu$m to 0.6 $\mu$m, and was within a range of 0.2 $\mu$m to 0.3 $\mu$m in all examples except for 0.6 $\mu$m in Example 6 and 0.5 $\mu$m in Comparative Example 2. The CV value of the smaller seed crystal was within 10% in all examples except for 15.1% in Comparative Example 8. The number average particle diameter of the larger seed crystal was in a range of 0.8 $\mu$m to 1.2 $\mu$m, and the CV value was within 10% in all examples except for 18.80% in Comparative Example 7.

The ratio of the number average particle diameter of the larger seed crystal to the average pore diameter of the porous support was 0.6 times or more and 2 times or less in all examples.

The ratio of the seed crystals having a smaller number average particle diameter to all seed crystals was 45% or more in all examples except for 30 wt% in Comparative Examples 6 and 9.

[Separation and Concentration Test of 30 wt% Hydrous Acetic Acid at 130°C]

Results of a separation and concentration test of 30 wt% hydrous acetic acid at 130°C are shown in Table 1. In the zeolite membrane composite mounted with the CHA-type zeolite membrane of Examples 1 to 12, the ratio ($A_e/A_0$), which was a characteristic in the invention, was in a range of 2.0 to 19.4, the water permeation flow rate was 3.3 kg/m$^2$·h to 12.5 kg/m$^2$·h, which was at a sufficient practical level, and the separation factor was more than 10,000 except for 1050 in Example 4. The reason why the separation factor is lower in Example 4 than that in other Examples is presumed to be that the ratio of the seed crystals having a smaller number average particle diameter to all seed crystals is 50 wt%, which is close to the lower limit value of 45 wt%. Although the separation factor is at a practical level, it is presumed that the amount is slightly insufficient to fill gaps between the seed crystals having a larger number average particle diameter.

In the zeolite membrane composite mounted with the AFX-type zeolite membrane of each of Examples 13 to 15, the ratio ($A_e/A_0$) was in a range of 2.8 to 19.4, the water permeation flow rate was 7.2 kg/m$^2$·h to 9.6 kg/m$^2$·h, which was at a sufficient practical level, and the separation factor was more than 10,000 except for 7120 in Example 15. The reason why the separation factor is lower in Example 15 than that in other Examples is presumed to be that the ratio of the seed crystals having a smaller number average particle diameter to all seed crystals is 50 wt%, which is close to the lower limit value of 45 wt%, as in the CHA-type. Although the separation factor is at a practical level, it is presumed that the amount is slightly insufficient to fill gaps between the seed crystals having a larger number average particle diameter.

In each of Comparative Examples 1 to 5, a zeolite membrane composite mounted with a CHA-type zeolite membrane was formed using a seed crystal having one type of size. The ratio ($A_e/A_0$) was 1.3 to 1.8, all of which were less than 2. The water permeation flow rate was 2.2 kg/m$^2$·h to 14.8 kg/m$^2$·h, which was a sufficient practical level, and the separation factors were all more than 10,000 in Comparative Examples 1 to 3, but were 155 and 20 in Comparative Examples 4 and 5, respectively, which had no effect. The reason is presumed to be that the ratio of the average particle diameter of the seed crystal to the pore diameter of the porous support was 0.38, which was smaller than 0.6 to 1.0 in Comparative Examples 1 to 3, and a large amount of seed crystals entered the pores of the seed crystal, resulting in many pore defects in the zeolite membrane.

In Comparative Examples 6 to 8, the ratios ($A_e/A_0$) in the zeolite membrane composites mounted with the CHA-type zeolite membranes were 35.6, 30.2, and 26.4, which were all more than 20. The water permeation flow rate was more than 50 kg/m$^2$·h, and the separation factors were all 1. It can be seen that when the ratio ($A_e/A_0$) is more than 20, the separation factor rapidly decreases. Thus, it can be seen that the ratio ($A_e/A_0$) is an important parameter for evaluating the quality of the zeolite membrane.

In Comparative Example 9, the ratio ($A_e/A_0$) in the zeolite membrane composite mounted with the AFX-type zeolite membrane was 28.6, which was more than 20. The water permeation flow rate was more than 50 kg/m$^2$·h, and the separation factor was 1. As in Comparative Examples 6 to 8, it can be seen that the ratio ($A_e/A_0$) is an important parameter for evaluating the quality of the zeolite membrane.

In Comparative Example 10, the ratio $(A_e/A_0)$ in the zeolite membrane composite mounted with the AFX-type zeolite membrane was 2.0. The water permeation flow rate was more than 50 kg/m$^2$ ·h, and the separation factor was 1. The reason why the separation factor is lowered despite a ratio $(A_e/A_0)$ of 2.0 is presumed to be that the Si/Al ratio is 4.8, the Si/Al ratio is low, and therefore, the environmental resistance is poor, and the zeolite membrane is collapsed during the separation test.

[Separation and Concentration Test of 5% Hydrous Acetic Acid at 130°C]

When the water content of acetic acid is 5 wt%, which is lower than 30 wt%, the water permeation flow rate tends to be low, and the separation factor tends to be low. Results of a separation and concentration test of 5 wt% hydrous acetic acid at 130°C are shown in Table 1. In the zeolite membrane composite mounted with the CHA-type zeolite membrane of each of Examples 1 to 12, the ratio $(A_e/A_0)$, which was a characteristic in the invention, was in a range of 2.0 to 19.4 as described above, the water permeation flow rate was 1.1 kg/m$^2$ ·h to 4.5 kg/m$^2$ ·h, which was at a sufficient practical level, and the separation factor was more than 10,000 except for 1050 in Example 4. The reason why the separation factor is lower in Example 4 than that in other Examples is presumed to be that the ratio of the seed crystals having a smaller number average particle diameter to all seed crystals is 50 wt%, which is close to the lower limit value of 45 wt%. Although the separation factor is at a practical level, it is presumed that the seed crystals having a smaller number average particle diameter are slightly insufficient to fill gaps between the seed crystals having a larger number average particle diameter.

In the zeolite membrane composite mounted with the AFX-type zeolite membrane of each of Examples 13 to 15, the ratio $(A_e/A_0)$ was in a range of 2.8 to 19.4 as described above, the water permeation flow rate was 3.0 kg/m$^2$·h to 3.6 kg/m$^2$·h, which was at a sufficient practical level, and the separation factor was more than 10,000 except for 3080 in Example 15. The reason why the separation factor is lower in Example 15 than in other Examples is presumed to be that the ratio of the seed crystals having a smaller number average particle diameter to all seed crystals is 50 wt%, which is close to the lower limit value of 45 wt%, as in the CHA-type. Although the separation factor is at a practical level, it is presumed that the amount is slightly insufficient to fill gaps between the seed crystals having a larger number average particle diameter.

In Comparative Examples 1 to 5, the zeolite membrane composites mounted with the CHA-type zeolite membranes were formed using seed crystals having one type of size. As described above, the ratios $(A_e/A_0)$ were 1.3 to 1.8, all of which were less than 2. The water permeation flow rates varied from less than 0.1 kg/m$^2$·h to 50 kg/m$^2$·h, and the separation factors varied from 1 to more than 10,000. There was no sample in which the permeation flow rate and the separation factor were maintained in a well-balanced manner.

In Comparative Examples 6 to 8, the ratios $(A_e/A_0)$ in the zeolite membrane composites mounted with the CHA-type zeolite membranes were 35.6, 30.2, and 26.4 as described above, which were all more than 20. The water permeation flow rates were more than 50 kg/m$^2$·h, and the separation factors were all 1. It can be seen that when the ratio $(A_e/A_0)$ is more than 20, the separation factor rapidly decreases. Thus, it can be seen that the ratio $(A_e/A_0)$ is an important parameter for evaluating the quality of the zeolite membrane.

In Comparative Example 9, the ratio $(A_e/A_0)$ in the zeolite membrane composite mounted with the AFX-type zeolite membrane was 28.6 as described above, which was more than 20. The water permeation flow rate was more than 50 kg/m$^2$ ·h, and the separation factor was 1. As in Comparative Examples 6 to 8, it can be seen that the ratio $(A_e/A_0)$ is an important parameter for evaluating the quality of the zeolite membrane.

In Comparative Example 10, the ratio $(A_e/A_0)$ in the zeolite membrane composite mounted with the AFX-type zeolite membrane was 2.0 as described above. The water permeation flow rate was more than 50 kg/m$^2$ ·h, and the separation factor was 1. The reason why the separation factor is lowered despite a ratio $(A_e/A_0)$ of 2.0 is presumed to be that the Si/Al ratio is 4.8, and the collapse of the zeolite crystal occurs.

In view of the above results, the following can be inferred. By using a CHA-type or AFX-type zeolite membrane having a Si/Al ratio of 5 or more and a large developed membrane area, a dehydration treatment can be performed on a mixed organic acid in a low water content region (about 5 wt%), for which a practically sufficient treatment capacity cannot be exhibited in a membrane in the related art, while achieving both a high water permeation flow rate and a high separationfactor.

[Validation Test of Measurement of Developed Surface Area $A_e$]

In the invention, it is necessary to measure the developed surface area $A_e$ using a molecular probe (methylene blue and the like). A validation test for the accuracy of the measurement method was performed as follows.

As the molecular probe, methylene blue (product number: 319112, a 0.05 wt% aqueous solution) manufactured by Sigma-Aldrich was diluted and used. As a visible spectrophotometer, UV-1800 manufactured by Shimadzu Corporation was used. Measurement conditions of the visible spectrophotometer are as follows.

- Measurement mode: spectra

- Light measurement mode: Abs (light absorption)
- Scan range: 800 nm to 400 nm
- Scanning speed: high speed
- Scan pitch: 1.0 nm
- Cell to be used: standard quartz cell for spectrophotometer (two-surface transparent matching product)

[Measurement Example 1: Validation Test for Influence of Evaluation Time]

<Measurement Example 1-1>

800 [mL] of a molecular probe solution having a methylene blue concentration of 7.82 [$\mu$mol/L] was prepared in a sealable cylindrical container having an inner diameter of 32 [mm$\varphi$] and a length of 1200 [mm]. Subsequently, the unfired CHA-type zeolite membrane prepared by the procedure in Example 1 was sealed at one end of an opening portion by a silicon plug, and immersed in the molecular probe solution. After 2 hours, when the zeolite membrane was taken out and the methylene blue concentration after the treatment was measured, the methylene blue concentration was decreased to 7.41 [$\mu$mol/L]. Since the methylene blue concentration was decreased from 7.82 [$\mu$mol/L] to 7.41 [$\mu$mol/L] by using 800 [mL] of the molecular probe solution, it can be said that $(7.82 - 7.41) \times 0.8 = 0.328$ [$\mu$mol] of methylene blue was adsorbed on the zeolite membrane. Accordingly, when substituted into the above equation 1, the $A_e$ value was $(0.328 \times 10^{-6} \times 6.02 \times 10^{23}) \times (1.3 \times 10^{-18}) = 0.257$ [m$^2$], and the apparent membrane area $A_0$ value was 0.05 [m$^2$], and therefore, the $A_e/A_0$ value was calculated as $0.257/0.05 = 5.1$.

[Measurement Example 1-2]

The zeolite membrane used in Measurement Example 1-1 was washed with an acetone solvent to recover a clean zeolite membrane having a white membrane surface. Subsequently, the $A_e/A_0$ value was evaluated in the same step as in Measurement Example 1-1 except that the immersion time was set to 3 minutes. The methylene blue concentration after the evaluation decreased to 7.51 [$\mu$mol/L], and the $A_e/A_0$ value obtained based on the concentration decrease degree was 3.8.

[Measurement Example 1-3]

The zeolite membrane used in Measurement Example 1-2 was washed with an acetone solvent to recover a clean zeolite membrane having a white membrane surface, and then, the $A_e/A_0$ value was evaluated in the same step as in Measurement Example 1-1 except that the immersion time was set to 10 minutes. The methylene blue concentration after the evaluation decreased to 7.42 [$\mu$mol/L], and the $A_e/A_0$ value obtained based on the concentration decrease degree was 5.0. From the above results, it is shown that the $A_e/A_0$ value is estimated to be small when the immersion time is too short even in the case of the molecular probe solution having the same concentration. It is shown that the immersion time of at least 10 minutes is required.

[Measurement Example 1-4]

The zeolite membranes used in Measurement Example 1-3 was subjected to a heat treatment at 500°C for 20 hours without washing with an acetone solvent, and the organic structure directing agent contained in the zeolite membrane and the adsorbed methylene blue were simultaneously incinerated and removed. The zeolite membrane after the heat treatment changed from light blue to white, and it was confirmed that the membrane surface was a clean zeolite membrane. Subsequently, the $A_e/A_0$ value was evaluated in the same step as in Measurement Example 1-3. The methylene blue concentration after the evaluation decreased to 7.37 [$\mu$mol/L], and the $A_e/A_0$ value obtained based on the concentration decrease degree was 5.5. The temperatures of the methylene blue solutions used in Measurement Examples 1-1 to 1-4 were all 18.6°C ($\pm$ 0.3°C), and there was no temperature change before and after the evaluation.

[Measurement Example 2: Validation Test for Influence of Probe Molecular Concentration]

<Measurement Example 2-1>

As in Measurement Example 1-1, 800 [mL] of a molecular probe solution having a methylene blue concentration of 7.82 [$\mu$mol/L] was prepared in a sealable cylindrical container having an inner diameter of 32 [mm$\varphi$] and a length of 1200 [mm]. Subsequently, the CHA-type zeolite membrane prepared by the procedure in Example 2 was sealed at one end of an opening portion by a silicon plug, and immersed in the molecular probe solution for 10 minutes. After a predetermined time, when the zeolite membrane was taken out and the methylene blue concentration after the treatment was measured, the methylene blue concentration was decreased to 7.60 [$\mu$mol/L]. The $A_e/A_0$ value obtained based on the concentration decrease degree was 2.8.

<Measurement Example 2-2>

The zeolite membrane used in Measurement Example 2-1 was washed with an acetone solvent to recover a clean zeolite membrane having a white membrane surface. Thereafter, the $A_e/A_0$ value was evaluated in the same step as in Measurement Example 2-1 except that 800 [mL] of a molecular probe solution having a methylene blue concentration of 3.91 [$\mu$mol/L] was used. After a predetermined time, when the zeolite membrane was taken out and the methylene blue concentration after the treatment was measured, the methylene blue concentration was decreased to 3.69 [$\mu$mol/L]. The $A_e/A_0$ value obtained based on the concentration decrease degree was 2.8, which was a value same as that in Measurement Example 2-1.

<Measurement Example 2-3>

The zeolite membrane used in Measurement Example 2-2 was washed with an acetone solvent to recover a clean zeolite membrane having a white membrane surface. Thereafter, the $A_e/A_0$ value was evaluated in the same step as in Measurement Example 2-1 except that 800 [mL] of a molecular probe solution having a methylene blue concentration of 0.78 [$\mu$mol/L] was used. After a predetermined time, when the zeolite membrane was taken out and the methylene blue concentration after the treatment was measured, the methylene blue concentration was decreased to 0.61 [$\mu$mol/L]. The $A_e/A_0$ value obtained based on the concentration decrease degree was 2.1, which was slightly smaller than those of Measurement Examples 2-1 and 2-2.

<Measurement Example 2-4>

The zeolite membrane used in Measurement Example 2-3 was washed with an acetone solvent to recover a clean zeolite membrane having a white membrane surface. Thereafter, the $A_e/A_0$ value was evaluated in the same step as in Measurement Example 2-1 except that 800 [mL] of a molecular probe solution having a methylene blue concentration of 0.26 [$\mu$mol/L] was used. After a predetermined time, when the zeolite membrane was taken out and the methylene blue concentration after the treatment was measured, the methylene blue concentration was decreased to 0.20 [$\mu$mol/L]. The $A_e/A_0$ value obtained based on the concentration decrease degree was 0.8, which was much smaller than those of Measurement Examples 2-1 and 2-2. The above results show that when the concentration of the molecular probe solution used for the evaluation is too low, the $A_e/A_0$ value is underestimated even with the same zeolite membrane and the same immersion time. It is shown that the $A_e/A_0$ value is a constant value at a certain or higher concentration.

<Measurement Example 2-5>

The zeolite membrane used in Measurement Example 2-4 was washed with an acetone solvent to recover a clean zeolite membrane having a white membrane surface. Thereafter, the $A_e/A_0$ value was evaluated in the same step as in Measurement Example 2-1 except that 800 [mL] of a very high-concentration molecular probe solution having a methylene blue concentration of 19.54 [$\mu$mol/L] was used. After a predetermined time, when the zeolite membrane was taken out and the methylene blue concentration after the treatment was measured, the methylene blue concentration was decreased to 19.05 [$\mu$mol/L]. The $A_e/A_0$ value obtained based on the concentration decrease degree was 6.1. The temperatures of the methylene blue solutions used in Measurement Examples 2 were all 18.3°C ($\pm$ 0.3°C), and there was no temperature change before and after the evaluation.
The above results show that when the concentration of the molecular probe solution used for the evaluation is too high, the $A_e/A_0$ value is overestimated even with the same zeolite membrane and the same immersion time. When compared with the $A_e/A_0$ values obtained in Measurement Examples 2-1 and 2-2, a relationship of about twice or more of the $A_e/A_0$ value is obtained, and therefore, it is considered that the probe molecule forms a multimolecular layer on the surface of the zeolite membrane and is adsorbed. Therefore, when methylene blue is used, it is preferable that the methylene blue concentration at least after the evaluation is in a range of 3.7 [$\mu$mol/L] to 7.6 [$\mu$mol/L]. Since this concentration range varies depending on the type of the probe molecule, when a probe molecule other than methylene blue is used, it is necessary to grasp the concentration range in advance by the same procedure as that of the present method.

[Measurement Example 3: Validation Test for Quality Inspection of Zeolite Membrane]

<Measurement Example 3-1>

800 [mL] of a molecular probe solution having a methylene blue concentration of 7.82 [$\mu$mol/L] was prepared in a sealable cylindrical container having an inner diameter of 32 [mm$\varphi$] and a length of 1200 [mm]. Subsequently, the unfired CHA-type zeolite membrane prepared by the procedure in Comparative Example 6 was sealed at one end of an opening portion by a silicon plug, and immersed in the molecular probe solution for 10 minutes. After a predetermined time, when the zeolite membrane was taken out and the methylene blue concentration after the treatment was measured, the methylene blue concentration was decreased to 5.24 [$\mu$mol/L]. The $A_e/A_0$ value obtained based on the concentration decrease degree was 32.1.

<Measurement Example 3-2>

The zeolite membrane used in Measurement Example 3-1 was subjected to a heat treatment at 500°C for 20 hours without washing with an acetone solvent, and the organic structure directing agent contained in the zeolite membrane and the adsorbed methylene blue were simultaneously incinerated and removed. The zeolite membrane after the heat treatment changed from light blue to white, and it was confirmed that the membrane surface was a clean zeolite membrane. Subsequently, the $A_e/A_0$ value was evaluated in the same step as in Measurement Example 3-1. The methylene blue concentration after the evaluation decreased to 4.95 [$\mu$mol/L], and the $A_e/A_0$ value obtained based on the concentration decrease degree was 35.6. As shown in Table 1, it is confirmed that the zeolite membrane has no denseness and cannot be used for dehydration.

<Measurement Example 3-3>

The $A_e/A_0$ value was evaluated in the same step as in Measurement Example 3-1, except that the unfired CHA-type zeolite membrane prepared in the procedure in Comparative Example 7 was used. After a predetermined time, when the zeolite membrane was taken out and the methylene blue concentration after the treatment was measured, the methylene blue concentration was decreased to 5.83 [$\mu$mol/L]. The $A_e/A_0$ value obtained based on the concentration decrease degree was 24.7.

<Measurement Example 3-4>

The zeolite membrane used in Measurement Example 3-3 was subjected to a heat treatment at 500°C for 20 hours without washing with an acetone solvent, and the organic structure directing agent contained in the zeolite membrane and the adsorbed methylene blue were simultaneously incinerated and removed. The zeolite membrane after the heat treatment changed from light blue to white, and it was confirmed that the membrane surface was a clean zeolite membrane. Subsequently, the $A_e/A_0$ value was evaluated in the same step as in Measurement Example 3-1. The methylene blue concentration after the evaluation decreased to 5.39 [$\mu$mol/L], and the $A_e/A_0$ value obtained based on the concentration decrease degree was 30.2. It is confirmed that the zeolite membrane has no denseness and cannot be used for dehydration.

<Measurement Example 3-5>

The $A_e/A_0$ value was evaluated in the same step as in Measurement Example 3-1, except that the unfired CHA-type zeolite membrane prepared in the procedure in Example 3 was used. After a predetermined time, when the zeolite membrane was taken out and the methylene blue concentration after the treatment was measured, the methylene blue concentration was decreased to 6.67 [$\mu$mol/L]. The $A_e/A_0$ value obtained based on the concentration decrease degree was 14.3.

<Measurement Example 3-6>

The zeolite membrane used in Measurement Example 3-5 was subjected to a heat treatment at 500°C for 20 hours without washing with an acetone solvent, and the organic structure directing agent contained in the zeolite membrane and the adsorbed methylene blue were simultaneously incinerated and removed. The zeolite membrane after the heat treatment changed from light blue to white, and it was confirmed that the membrane surface was a clean zeolite membrane. Subsequently, the $A_e/A_0$ value was evaluated in the same step as in Measurement Example 3-1. The methylene blue concentration after the evaluation decreased to 6.60 [$\mu$mol/L], and the $A_e/A_0$ value obtained based on the concentration decrease degree was 15.2. As shown in Table 1, it is confirmed that the zeolite membrane has good dehydration performance.

<Measurement Example 3-7>

The $A_e/A_0$ value was evaluated in the same step as in Measurement Example 3-1, except that the unfired AFX-type zeolite membrane prepared in the procedure in Example 15 was used. After a predetermined time, when the zeolite membrane was taken out and the methylene blue concentration after the treatment was measured, the methylene blue concentration was decreased to 6.43 [$\mu$mol/L]. The $A_e/A_0$ value obtained based on the concentration decrease degree was 17.3.

<Measurement Example 3-8>

The zeolite membrane used in Measurement Example 3-7 was subjected to a heat treatment at 500°C for 20 hours without washing with an acetone solvent, and the organic structure directing agent contained in the zeolite membrane and the adsorbed methylene blue were simultaneously incinerated and removed. The zeolite membrane after the heat treatment changed from light blue to white, and it was confirmed that the membrane surface was a clean zeolite membrane. Subsequently, the $A_e/A_0$ value was evaluated in the same step as in Measurement Example 3-1. The methylene blue concentration after the evaluation decreased to 6.26 [$\mu$mol/L], and the $A_e/A_0$ value obtained based on the concentration decrease degree was 19.4. As shown in Table 1, it is confirmed that the zeolite membrane has good dehydration performance. The temperatures of the methylene blue solutions used in Measurement Examples 3 were all 17.6°C ($\pm$ 0.3), and there was no temperature change before and after the evaluation.

From the above results, it is shown that a zeolite membrane having an $A_e/A_0$ value of less than 2 or more than 20 does not exhibit separation performance and is a defective membrane. As described above, a method of inspection using a molecular probe and using the $A_e/A_0$ value as a parameter makes it possible to accurately and easily evaluate characteristics such as the denseness of the zeolite membrane. Further, when this inspection method is performed before firing the zeolite membrane, the unfired zeolite membrane having an $A_e/A_0$ value of less than 2 or more than 20 does not need to be subjected to a firing step, and therefore, the problem of wasting energy due to unnecessary heating can be solved, which is preferred. Further, under a condition in which a step capability index is high and the variation in step is small, it is not necessary to inspect all products in this inspection, and it is possible to shift to sampling inspection, and therefore, a further reduction in manufacturing cost can be realized.

Industrial Applicability

According to the invention, a zeolite membrane composite having a high permeation flow rate and a high separation factor can be supplied more easily (at low cost) with a smaller number of steps than that of the manufacturing method in the related art.

**Claims**

1. A zeolite membrane composite, comprising:

   a porous support; and
   an aluminosilicate zeolite membrane formed on a surface of the porous support and having a framework density of 10 or more and 17 or less, wherein
   a Si/Al molar ratio on a surface of the zeolite membrane is 5 or more, and
   a ratio ($A_e/A_0$) of a developed membrane area $A_e$ in consideration of unevenness on the surface of the zeolite membrane to an apparent membrane area $A_0$ not in consideration of the unevenness on the surface of the zeolite membrane is 2 or more and 20 or less.

2. The zeolite membrane composite according to claim 1, wherein
   the zeolite membrane has a pore structure having an oxygen-containing 6 or more-membered ring and an oxygen-containing 8 or less-membered ring.

3. The zeolite membrane composite according to claim 1 or 2, wherein
   the zeolite membrane contains zeolite having a CHA-type or AFX-type crystal structure.

4. A method for manufacturing a zeolite membrane composite, the method comprising:

a step of attaching a seed crystal to a porous support and forming a zeolite membrane on a surface of the porous support by hydrothermal synthesis, wherein
the seed crystal is a mixture of seed crystals having different number average particle diameters and having two types of dispersion peaks, and each of the seed crystals has a coefficient of variation CV value of 12% or less, a ratio of seed crystals having a smaller number average particle diameter to all seed crystals is 45 wt% or more and 95 wt% or less, and
a number average particle diameter of seed crystals having a larger number average particle diameter among the seed crystals is 0.6 times or more and 2 times or less an average pore diameter of the porous support.

5. The method for manufacturing a zeolite membrane composite according to claim 4, wherein
the number average particle diameter of the seed crystals having a smaller number average particle diameter among the seed crystals is 0.2 times or more and 0.6 times or less the number average particle diameter of the seed crystals having a larger number average particle diameter.

6. The method for manufacturing a zeolite membrane composite according to claim 4 or 5, wherein
the porous support has an average pore diameter of 0.1 $\mu$m or more and 5 $\mu$m or less.

7. A dehydration method comprising:
removing water from a mixed aqueous solution or mixed water vapor containing an acidic organic compound by using the zeolite membrane according to any one of claims 1 to 3.

8. A method for evaluating a surface of a zeolite membrane composite, comprising:
calculating, based on the number of adsorbed molecular probes, the developed membrane area $A_e$ in consideration of the unevenness on the surface of the zeolite membrane according to claim 1.

9. A method for inspecting a quality of a zeolite membrane composite, comprising:
identifying a defective zeolite membrane containing a defect of or beyond an allowable limit based on the number of the adsorbed molecular probes by using the method for evaluating a surface of a zeolite membrane composite according to claim 8.

FIG. 1

FIG. 2

FIG. 3

FIG. 4

**FIG. 5**

**FIG. 6**

FIG. 7

FIG. 8

**FIG. 9**

**FIG. 10**

**FIG. 11**

**FIG. 12**

*FIG. 13*

*FIG. 14*

*FIG. 15*

*FIG. 16*

## INTERNATIONAL SEARCH REPORT

| International application No. |
| --- |
| PCT/JP2020/018072 |

| A. CLASSIFICATION OF SUBJECT MATTER |
| --- |
| B01D 61/36(2006.01)i; B01D 69/00(2006.01)i; B01D 69/10(2006.01)i; B01D 69/12(2006.01)i; B01D 71/02(2006.01)i; C01B 39/02(2006.01)i<br>FI: B01D71/02; B01D61/36; B01D69/00; B01D69/10; B01D69/12; C01B39/02<br>According to International Patent Classification (IPC) or to both national classification and IPC |

| B. FIELDS SEARCHED |
| --- |
| Minimum documentation searched (classification system followed by classification symbols)<br>B01D61/36; B01D69/00; B01D69/10; B01D69/12; B01D71/02; C01B39/02 |
| Documentation searched other than minimum documentation to the extent that such documents are included in the fields searched<br>Published examined utility model applications of Japan       1922–1996<br>Published unexamined utility model applications of Japan    1971–2020<br>Registered utility model specifications of Japan           1996–2020<br>Published registered utility model applications of Japan     1994–2020 |
| Electronic data base consulted during the international search (name of data base and, where practicable, search terms used)<br>JSTPlus/JMEDPlus/JST7580 (JDreamIII) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2012-45483 A (MITSUBISHI CHEMICAL CORP.) 08.03.2012 (2012-03-08) entire text | 1-9 |
| A | JP 2018-164908 A (MITSUBISHI CHEMICAL CORPORATION) 25.10.2018 (2018-10-25) entire text | 1-9 |
| A | JP 2005-74382 A (MITSUI SHIPBUILDING & ENGINEERING CO., LTD.) 24.03.2005 (2005-03-24) entire text | 1-9 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>08 June 2020 (08.06.2020) | Date of mailing of the international search report<br>16 June 2020 (16.06.2020) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

| | | | International application No. |
|---|---|---|---|
| | **INTERNATIONAL SEARCH REPORT** | | |
| | Information on patent family members | | PCT/JP2020/018072 |

| Patent Documents referred in the Report | Publication Date | Patent Family | Publication Date |
|---|---|---|---|
| JP 2012-45483 A | 08 Mar. 2012 | (Family: none) | |
| JP 2018-164908 A | 25 Oct. 2018 | (Family: none) | |
| JP 2005-74382 A | 24 Mar. 2005 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011121045 A
- JP 6107809 B
- JP 2011121854 A
- JP 2013126649 A

**Non-patent literature cited in the description**

- *Microporous and Mesoporus Materials Journal,* 2012, vol. 153, 94-99
- *Chemistry of Materials,* 1996, vol. 8, 2409-2411
- *RSC Advances Journal,* 2015, vol. 5, 27087-27090